# EUROPÄISCHE PATENTSCHRIFT

(11) **EP 0 341 610 B1**
(45) Veröffentlichungstag und Bekanntmachung des Hinweises auf die Patenterteilung: **19.01.1994**
(21) Anmeldenummer: 89108168.9
(22) Anmeldetag: 05.05.1989
(51) Int. Cl.: F16D 55/224, F16D 55/02, F16D 65/02, F16D 65/16

(54) **Teilbelag-Scheibenbremse**
Spot-type disc brake
Frein à disque à garniture partielle

(30) Priorität: 07.05.1988 DE 3815733; 16.08.1988 DE 3827686; 05.04.1989 DE 3910969
(43) Veröffentlichungstag der Anmeldung: 15.11.1989
(73) Patentinhaber: ITT Automotive Europe GmbH, 60488 Frankfurt (DE)
(72) Erfinder: Thiel, Rudolf, D-6000 Frankfurt/M 90 (DE); Halasy-Wimmer, Georg, D-6236 Eschborn (DE); Klimt, Ulrich, D-6109 Mühltal 3 (DE); Schiel, Wolfgang, D-6230 Frankfurt/M 80 (DE); Bretzler, Rainer, D-6239 Eppstein 2 (DE); Dreilich, Ludwig, Dr., D-6242 Kronberg (DE); Rückert, Helmut, D-6107 Reinheim 3 (DE); Bach, Uwe, D-6272 Niedernhausen (DE); Weiler, Rolf, D-6239 Eppstein 2 (DE); Leidecker, Hans-Dieter, D-6230 Frankfurt/M 80 (DE); Metzen, Hans-Peter, D-6380 Bad Homburg-Obererlenbach (DE); Störzel, Karl, D-6072 Dreieich (DE); Dinges, Detlef, D-6108 Weiterstadt (DE); Schmitt, Stefan, D-6228 Eltville (DE); Döll, Andreas, D-6000 Frankfurt/Main (DE); Hoffmann, Michael, Dr., D-6349 Mittenaar 1 (DE)

(56) Entgegenhaltungen:
- EP-A- 0 162 744
- DE-A- 2 538 352
- DE-A- 3 014 057
- DE-A- 3 121 890
- DE-A- 3 220 632
- DE-A- 3 415 994
- DE-A- 3 621 507
- DE-C- 2 451 604
- DE-C- 2 804 808
- DE-C- 2 926 818
- DE-C- 2 946 336
- DE-C- 3 009 524
- FR-A- 2 539 475
- GB-A- 842 913
- GB-A- 2 123 909

## Beschreibung

Die Erfindung betrifft eine Teilbelag-Scheibenbremse gemäß dem Oberbegriff des Patentanspruches 1.

Eine solche Bremse ist aus der DE-A-28 04 808 bekannt. Diese bekannte Bremse ist eine Schwimmsattel-Teilbelag-Scheibenbremse für Kraftfahrzeuge mit einem am Achsschenkel eines Kraftfahrzeuges zu befestigenden, relativ zu einer Bremsscheibe unverschieblichen Bremsträger, an dem beiderseits der Bremsscheibe angeordnete Bremsbeläge und ein den Rand der Bremsscheibe und die Bremsbeläge von außen U-förmig umgreifender Bremssattel axial verschiebbar geführt und gehalten sind. Der Bremsträger weist in einer Sekantenrichtung der Bremsscheibe im Abstand voneinander angeordnete Tragteile auf, die den Rand der Bremsscheibe übergreifen und in denen die in Sekantenrichtung liegenden Enden der Bremsbeläge geführt und abgestützt sind. Der Bremssattel ist mittels einer auf der der Bremsscheibe abgekehrten Seite des Bremsträgers angeordneten Bolzenführung axial verschiebbar mit dem Bremsträger verbunden. Nachteilig müssen beide Bolzen aus dem Bremsträger herausgeschraubt und eine Gehäusehaltefeder gelöst werden, ehe ein Bremsbelagwechsel stattfinden kann.

Aus der DE-A-30 09 524 ist eine Scheibenbremse vom Stiftgleittyp bekannt, bei der ein Gleitstift lösbar und das Gehäuse nach Lösen dieses Gleitstiftes schwenkbar ist. Die Bremsbeläge 3 sind zwar am Bremsträger 2 abgestützt, die Lagerung des Gehäuses auf dem äußeren Bremsbelag ist aber aufwendig.

Aus der DE-A-30 14 057 ist es für eine Schwimmsattelbremse bekannt, die Enden von Bremsbelägen mit L-förmigen Ansätzen zu versehen. Diese L-förmigen Ansätze dienen nicht zur ziehenden Belastung der Bremsbeläge, sondern zur Führung des Schwimmsattels, der über die Ansätze der Bremsbeläge gegenüber dem Bremsträger geführt wird.

Aus der GB-A-842 913 ist ein Bremsbelag mit einem Reibbelag und einer Trägerplatte bekannt, bei dem die Trägerplatte an der in Umfangsrichtung verlaufenden Oberseite einen in der Symmetrieachse angeordneten kreissektorförmigen Vorsprung 28 aufweist. Der bekannte Bremsbelag wird in einer Festsattel-Teilbelag-Scheibenbremse verwendet. Bei dieser Scheibenbremse ist das Gehäuse nicht verschiebbar, sondern starr am Achsschenkel eines Fahrzeuges befestigt. Probleme mit der beweglichen Abstützung des Gehäuses können hier also nicht auftreten. Tatsächlich ist der Vorsprung 28 zur Abstützung des Bremsbelags am Gehäuse und nicht zur Abstützung des Gehäuses bestimmt.

Es ist Aufgabe der Erfindung, eine bekannte Schwimmsattel-Teilbelag-Scheibenbremse zu verbessern und eine einfache und eindeutige Führung bzw. Lagerung des Gehäuses anzugeben.

Diese Aufgabe wird gemäß den Merkmalen des Anspruchs 1 gelöst. Die erfindungsgemäße Lösung ist dadurch gekennzeichnet, daß ein in der Symmetrieachse der Bremse liegender Vorsprung der Trägerplatte das Gehäuse radial und mittig abstützt. Mit Hilfe des in der Symmetrieachse liegenden Vorsprungs ist das Gehäuse in einer Dreipunktlagerung fixiert, wobei die ersten beiden Abstützpunkte des Gehäuses jeweils an den in dem Bremsträger verschraubten Führungsbolzen liegt und der dritte Abstützpunkt an der Trägerplatte vorgesehen ist. Mit Hilfe dieser Dreipunktlagerung ist das Gehäuse in einfacher Weise am Bremsträger festgelegt und eine sichere und eindeutige Führung geschaffen.

In vorteilhafter Weise ist der Vorsprung kreissektorförmig ausgebildet und greift in eine kreissektorförmige Ausnehmung der Gehäusebrücke ein, deren Radius größer als der Radius des Vorsprungs ist. Dabei ist der Radius des Vorsprungs minus toleriert und der Radius der Ausnehmung positiv toleriert. Damit wird sichergestellt, daß der Vorsprung der Trägerplatte gänzlich in die Ausnehmung der Gehäusebrücke eingreifen kann. Gleichzeitig wird das Gehäuse formschlüssig in tangentialer Richtung fixiert.

In vorteilhafter Weise unterteilt eine nutenförmige Ausnehmung den Vorsprung in zwei trapezförmige Ansätze, die eine Korrosion zwischen Trägerplatte und Gehäusebrücke verhindern. Die Anlageflächen zwischen der Gehäusebrücke und der Trägerplatte sind klein gehalten und Korrosionsprodukte können durch die Ausnehmung und an den Seiten der trapezförmigen Vorsprünge herausfallen. Noch begünstigt wird das Herausfallen der Korrosionsprodukte bei Bremsbetätigung, wenn die trapezförmigen Ansätze an der Gehäusebrücke schaben.

In vorteilhafter Weise weist die Trägerplatte an der in Umfangsrichtung verlaufenden Oberseite eine Fase zu der Rückseite der Trägerplatte auf. Damit ist einerseits sichergestellt, daß der Bremsbelag bei Bremsbelagwechsel mit Hilfe der Fase an den äußeren Schenkel des Gehäuses angelegt wird und dabei über Unebenheiten an der Gehäusebrücke hinweggleitet und gleichzeitig Korrosionsprodukte, die eventuell an der Innenkante zwischen Gehäusebrücke und äußerem Schenkel liegen, die Anlage des Bremsbelages an dem äußeren Schenkel nicht behindern.

Eine einfache Ausgestaltung sieht vor, daß das Gehäuse an der Knickkante zwischen Gehäusebrücke und Schenkel eine Tasche im Bereich der Abstützung aufweist. Die Tasche kann Korrosionsprodukte, die von dem Bremsbelag abgeschabt werden, aufnehmen.

In vorteilhafter Weise ist die Ausnehmung der Gehäusebrücke bearbeitet, so daß der Bremsbelag mit seinem Vorsprung in einer definierten Lage an der bearbeiteten Fläche zur Anlage gelangt.

Zwei in der Radialen versetzte Ausnehmungen an der Gehäusebrücke, die durch eine Fase getrennt sind, sorgen dafür, daß bei Bremsbelagwechsel und falschem Einlegen des Bremsbelages der Bremsbelag bei der ersten Bremsbetätigung über bearbeitete Flächen und die Fase an dem äußeren Schenkel zur Anlage gelangt. Dabei ist sichergestellt, daß ungenaue Gußtoleranzen überbrückt werden und kein radialer Ansatz an einer unbearbeiteten Gehäusebrücke vorhanden ist.

In vorteilhafter Weise liegt die Kontur des Bremsbelages außerhalb eines Schwenkbereiches des Gehäuses und ist das Gehäuse um einen der Bolzen schwenkbar. Damit kann ein Bremsbelagwechsel stattfinden, indem ein Bolzen aus dem Bremsträger herausgeschraubt, von der Teilbelag-Scheibenbremse entfernt und das Gehäuse um den anderen Bolzen geschwenkt wird.

In vorteilhafter Weise weist das Gehäuse in Axialrichtung hervorspringende Augen mit Bohrungen auf, in denen die Bolzen angeordnet sind. Wenn die Augen in Axialrichtung hervorspringen, so sind die Augen im Bereich der Betätigungseinheit, also in Axialrichtung, hinter dem Kolben angeordnet, so daß einerseits die Bremsbeläge nicht behindert sind und andererseits die Führungbolzen in einer Radialen zwischen der Horizontalebene der Zylinderachse und einer Horizontalebene der radialen Abstützpunkte an dem Bremsträger liegen.

Gemäß einer vorteilhaften Ausgestaltung des Erfindungsgedankens weist das Gehäuse seitlich hervorspringende Gehäusearme mit Bohrungen auf, in denen die Bolzen angeordnet sind. Durch die seitliche Anordnung der Gehäusearme wird der Abstand zwischen den Bolzen vergrößert. Die Gehäusearme bestimmen im wesentlichen die Endpunkte eines Schwenkradius, so daß bei vergrößertem Abstand der Gehäusearme der Schwenkradius größer wird und somit Konturen des Gehäuses, des Bremsträgers und der Bremsbeläge einander nicht hinderlich sind.

Eine einfache Ausgestaltung der Erfindung sieht vor, daß der Bolzen, um den geschwenkt wird, fest in dem Bremsträger eingepreßt ist. Damit entfallen Arbeitsvorgänge, wie Gewindeschneiden für den Bolzen, um den geschwenkt wird. Gleichzeitig kann dieser Bolzen durch eine metallische Schutzkappe, die das Gehäuse aufweist, vor äußeren Einflüssen geschützt sein.

Eine besonders einfache Ausgestaltung der Erfindung sieht vor, daß in der Bohrung des Gehäusearmes zwischen den Bolzen und dem Arm zwei Metallhülsen angeordnet sind. Damit besteht die Bolzenführung für den Bolzen, um den geschwenkt werden soll, aus zwei einfach und billig herstellbaren Metallhülsen.

Eine weitere einfache Ausgestaltung der Erfindung sieht vor, daß die Bolzen identisch sind. Damit findet nur ein Bolzentyp Verwendung, so daß Fertigung und Lagerhaltung vereinfacht sind.

In vorteilhafter Weise schützt eine Dichtungskappe, die an einem oberen Ende des Bolzens angeordnet ist, und eine weitere Dichtungsmanschette, die zwischen dem Gehäusearm und dem Tragarm des Bremsträgers angeordnet ist, den Bolzen in seinem oberen Ende und in einem Bereich zwischen dem Gehäusearm und dem Tragarm vor äußeren Einflüssen.

Gemäß einer bevorzugten Ausführungsform der Erfindung ist vorgesehen, daß die Trägerplatte eines Bremsbelages auf ihrer, der Belagseite gegenüberliegenden Seite Warzen aufweist, die zur Abstützung der Gehäusebrücke über dem Bremsbelag an den Tragarmen dienen.

Eine vorteilhafte Ausgestaltung der Erfindung sieht vor, daß der kolbenseitige Bremsbelag von einer spiralförmigen Feder gesichert ist und daß ein spiralförmiger Abschnitt der Feder in einer Nut eines Kolbens eingesetzt ist. Dadurch, daß der spiralförmige Abschnitt der Feder in die Nut des Kolbens eingreift, wird ein sicherer Sitz der Feder in dem Kolben erzielt, der mit einer einfachen Montage durchgeführt werden kann.

Gemäß einer ebenfalls bevorzugten Ausgestaltung der Erfindung ist vorgesehen, daß eine Feder in einer Ausnehmung der Trägerplatte eingesetzt ist und mit oberen Enden in eine Ausnehmung der Gehäusebrücke eingreift.

In vorteilhafter Weise weist die Trägerplatte eines Bremsbelages seitliche Anlageflächen auf, die Zur seitlichen Abstützung und zur sicheren Führung der Feder dienen. Durch eine Abstützung der Feder in oberen Bereichen ist die Feder gegen eine Verdrehung gesichert.

Schutz gesucht wird auch für den Bremsbelag an sich.

Vorteilhaft weist die Trägerplatte eines Bremsbelages einen in der Symmetrieachse des Bremsbelages angeordneten halbkreisförmigen Vorsprung auf, mit dem eine punktförmige Anlage im Idealfall in der Symmetrieachse der Teilbelag-Scheibenbremse an der Gehäusebrücke möglich ist.

In vorteilhafter Weise weist die Trägerplatte an in Umfangsrichtung beabstandeten Enden hakenförmige Bereiche mit Vorsprüngen auf, die in Nuten von Tragarmen des Bremsträgers eingreifen. Damit ist in vorteilhafter Weise ein Pull-Push oder ein Push-Pull-Prinzip verwirklicht, bei dem in vorteilhafter Weise die in Umfangsrichtung auftretenden Bremskräfte auf beide Tragarme verteilt sind.

Wenn die Kanten der hakenförmigen Bereiche mit der übrigen radial oben liegenden Trägerplattenkante fluchten, kann in vorteilhafter Weise das Gehäuse um einen der Bolzen geschwenkt werden.

In vorteilhafter Weise greift eine Ausnehmung in den Vorsprung der Trägerplatte ein, so daß der Vorsprung in zwei trapezförmige Ansätze unterteilt ist. Dabei behalten die Oberflächen der trapezförmigen Ansätze den Radius zu der Zylinderachse bei.

Des weiteren ist in vorteilhafter Weise an den trapezförmigen Vorsprüngen auf der dem Vorsprung abgewandten Seite des Vorsprungs jeweils eine kleinere Ausnehmung angeordnet, so daß auch an den Seiten der trapezförmigen Vorsprünge, die der mittleren Ausnehmung abgewandt sind, Korrosionsprodukte nach außen fallen können.

In vorteilhafter Weise weist der Vorsprung eine Länge in Umfangsrichtung auf, die etwa bei einem Drittel der Gesamtlänge des Bremsbelages in Umfangsrichtung liegt.

In vorteilhafter Weise ragt der Vorsprung maximal 20 mm, insbesondere 13 mm, über den Reibbelag bzw. über den Umfang der Bremsscheibe hinaus. Mit Hilfe dieser Größenangaben wird deutlich, daß der Vorsprung im Hinblick auf den gesamten Reibbelag nur unwesentlich über die Kontur des Reibbelages bzw. über die Kontur der Bremsscheibe hinausragt.

Der Vorsprung ist in vorteilhafter Weise durch den Radius charakterisiert, den ein Werkzeug an der Gehäusebrücke hineinfräst. Dieses sich drehende bearbeitende Werkzeug hat seinen Rotationsmittelpunkt in der Zylinderachse der Betätigungseinheit. Der Radius an der Ausnehmung der Gehäusebrücke gibt auch gleichzeitig den Radius des Vorsprungs an, so daß bei in die Bremse eingesetztem Bremsbelag der Mittelpunkt des Radius mit der Zylinderachse zusammenfällt. Dieser Radius beträgt bei größeren Scheibenbremsen 36 und bei kleineren Scheibenbremsen etwa 30 mm.

In vorteilhafter Weise beträgt die radiale Strecke zwischen den radialen Abstützpunkten der Trägerplatte zwischen 30 und 50 mm. Dabei sind zwei Abstützpunkte radial nach innen gerichtet und liegen in den hakenförmigen Bereichen und der dritte Abstützpunkt wird durch den Vorsprung in der Symmetrieachse charakterisiert. Insbesondere beträgt der Abstand 32 bis 45 mm, und liegt in vorteilhafter Weise in der Größenordnung für den Radius des Vorsprungs.

In vorteilhafter Weise beträgt der Abstand zwischen den Abstützflächen der radialen Vorsprünge für die Umfangskräfte etwa 120 bis 150 mm.

Nachfolgend ist die Erfindung anhand von Ausführungsbeispielen in der Zeichnung näher erläutert.

Es zeigen:
- Fig. 1: eine Teilbelag-Scheibenbremse in geschnittener Seitenansicht,
- Fig. 2: die Teilbelag-Scheibenbremse teilweise geschnitten in Frontansicht,
- Fig. 3: die Teilbelag-Scheibenbremse teilweise geschnitten in Draufsicht,
- Fig. 4: eine weitere Teilbelag-Scheibenbremse teilweise geschnitten in Draufsicht,
- Fig. 5: die Teilbelag-Scheibenbremse geschnitten in Seitenansicht,
- Fig. 6: die Teilbelag-Scheibenbremse teilweise geschnitten in Frontansicht und
- Fig. 7: einen Ausschnitt einer Fixierung einer Trägerplatte in einem Gehäuse,
- Fig. 8: eine Teilbelag-Scheibenbremse mit einer Belaghaltefeder teilweise geschnitten in Frontansicht,
- Fig. 9: dieselbe Teilbelag-Scheibenbremse teilweise geschnitten in Draufsicht,
- Fig. 10: dieselbe Teilbelag-Scheibenbremse in geschnittener Seitenansicht,
- Fig. 11: eine Teilbelag-Scheibenbremse mit zwei gleichen Dämpfungshülsen,
- Fig. 12 und 13: einen Ausschnitt einer Trägerplatte mit Feder,
- Fig. 14,15 und 16: eine Teilbelag-Scheibenbremse mit hervorspringenden Augen,
- Fig. 17 und 18: einen Bremsbelag mit einem Vorsprung,
- Fig. 19: einen Bremsbelag mit zwei trapezförmigen Ansätzen,
- Fig. 20: einen Bremsbelag in Anlage an einem äußeren Schenkel,
- Fig. 21: eine bearbeitete Gehäusebrücke und
- Fig. 22: eine Tasche in einem Bremsgehäuse.

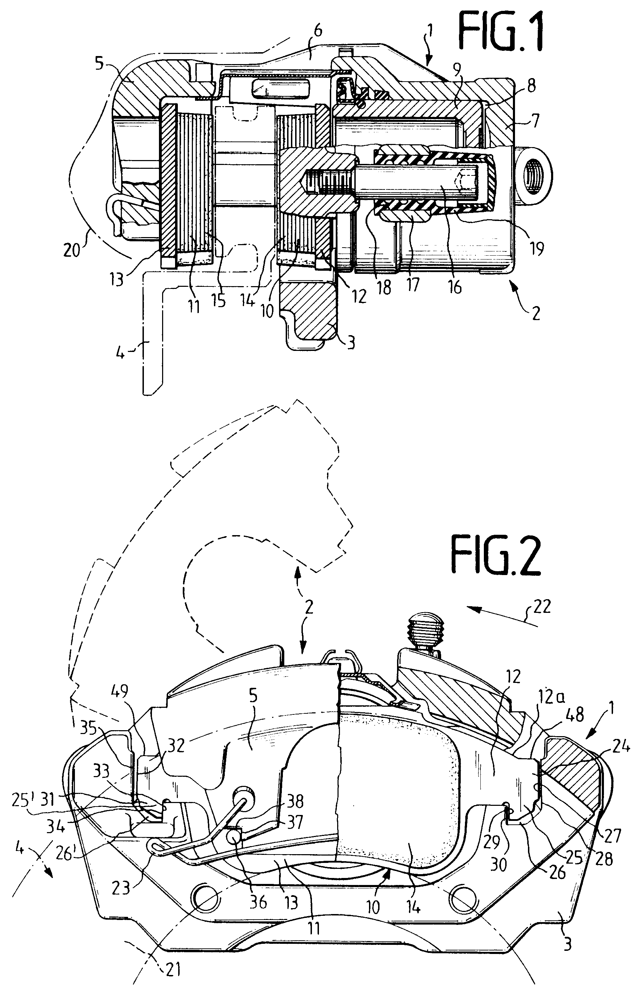

Fig. 1 zeigt eine Faustsattel-Teilbelag-Scheibenbremse 1 mit einem sattelförmigen Gehäuse 2 und einem Bremsträger 3. Das Gehäuse 2 umgreift eine Bremsscheibe 4 U-förmig mit einem Schenkel 5, einer Gehäusebrücke 6 und einem inneren Schenkel 7. In dem inneren Schenkel 7 ist eine einen Zylinder 8 und einen Kolben 9 aufweisende Betätigungseinheit 8,9 angeordnet, die bei Bremsbetätigung einen inneren Bremsbelag 10 direkt und einen äußeren Bremsbelag 11 indirekt über die Gehäusebrücke 6 und den äußeren Schenkel 5 gegen die Bremsscheibe 4 drückt. Die Bremsbeläge 10,11 weisen Trägerplatten 12,13 und Reibbeläge 14,15 auf. Das Gehäuse 2 ist gleitend auf zwei Bolzen 16 gelagert. (Nur der eine Bolzen 16 ist in dieser Figur sichtbar.) Der Bolzen 16 ist im Bremsträger 3 verschraubt. Das Gehäuse 2 weist einen Gehäusearm 17 mit einer Bohrung 18 auf. Eine Dämpfungshülse 19 ist koaxial auf dem Bolzen 16, in der Bohrung 18 und an beiden Seiten der Bohrung 18 herausragend, angeordnet. Die Teilbelag-Scheibenbremse 1 ist in einem Rad mit einer Radkontur 20 angeordnet.

Fig. 2 zeigt die Teilbelag-Scheibenbremse 1 mit dem aufklappbaren Gehäuse 2 und dem Bremsträger 3. Die Bremsscheibe 4 mit einer Reibfläche 21 dreht bei Vorwärtsfahrt in Richtung 22. Das Gehäuse 2 und der Bremsträger 3 sind mit einer Feder 23 gegeneinander verspannt. Die Trägerplatte 12 des Bremsbelages 10 weist zwei in Umfangsrichtung beabstandete Enden 24,31, auch hakenförmige Bereiche genannt, mit jeweils einem radial nach innen gerichteten Vorsprung 25,25' auf, der in eine nahe der Bremsscheibe 4 angeordnete Nut 26,26' des Bremsträgers 3 hineinragt. Bei Bremsbetätigung während einer Vorwärtsfahrt stützt sich der Bremsbelag 10 mit seiner Vorsprungsfläche 29 an einer Nutfläche 30 des Bremsträgers 3 ab. Bei Bremsbetätigung in Rückwärtsfahrt stützt sich der Bremsbelag 10 mit einer Stirnfläche 27 der Trägerplatte 12 an einer Nutfläche 28 in der Nut 26 ab. Das Ende 31 der Trägerplatte 12 weist Flächen 32,33 auf, die sich bei Bremsbetätigung gegen die Flächen 34,35 des Bremsträgers 3 legen. Die Trägerplatte 13 des Bremsbelages 11 weist zwei Bolzen 36, auch Warzen, Vorsprünge oder Noppen genannt, (nur der eine Bolzen 36 ist wegen der geschnittenen Darstellung sichtbar) auf, die dazu dienen, das Gehäuse 2 bei Bremsbetätigung über die Trägerplatte 13 am Bremsträger 3 abzustützen. Das Gehäuse 2 weist Flächen 37,38 auf, die sich rechteckförmig an den Bolzen 36 anlegen. Die Bolzen 36 sind senkrecht auf der der Belagseite gegenüberliegenden Seite der Trägerplatte 13 zentrisch und symmetrisch angeordnet. Kanten 48,49 der hakenförmigen Bereiche 24,31, die den Vorsprüngen 25 gegenüberliegen, fluchten in etwa mit einer Trägerplattenkante 12a. Damit liegen die Kanten 12a,48,49, die eine äußere obere Kontur der Trägerplatte 12 des Bremsbelages 10 bilden, außerhalb des Schwenkbereiches der Gehäusebrücke 6 des Gehäuses 2. Damit ist die obere Kontur 12a,48,49 der Bremsbeläge 10,11 derart ausgestaltet, daß das Gehäuse 2 um einen der Bolzen 16 schwenkbar ist. Die äußere obere Kontur 12a,48,49 der Trägerplatte 12 ist vorbestimmt. Es empfiehlt sich daher, das Gehäuse 2 mittig an der äußeren Trägerplatte 13 abzustützen.

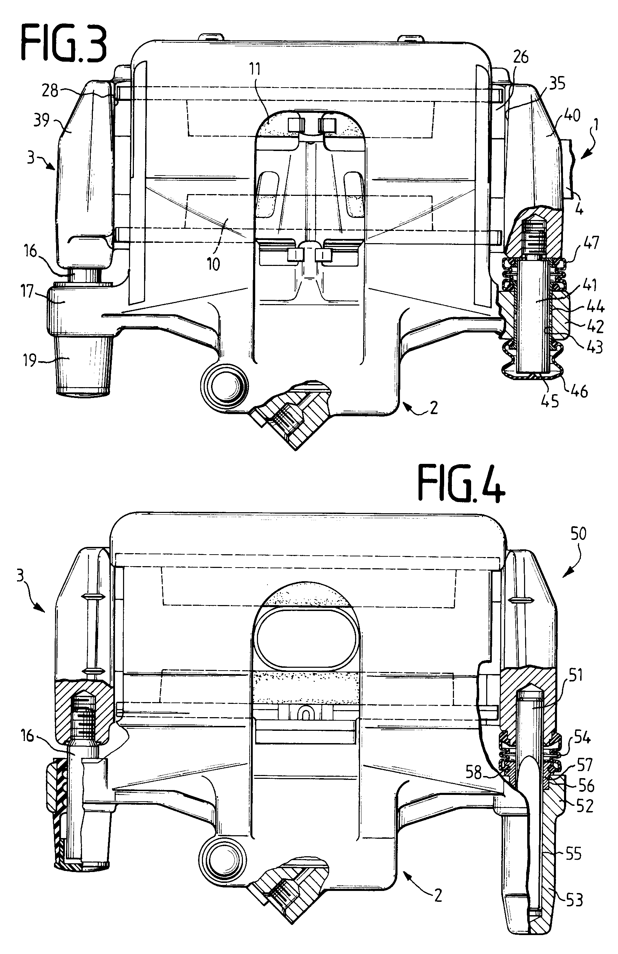

Fig.3 zeigt die Teilbelag-Scheibenbremse 1 mit dem Bremsträger 3, der zwei sich in axialer Richtung über die Bremsscheibe 4 erstreckende Tragarme 39,40 aufweist. Die Tragarme 39,40 bilden mit den einander zugekehrten Flächen 28,35 einen radial nach außen offenen Schacht zur Aufnahme und Führung der Bremsbeläge 10,11 und weisen die sich nahe der Bremsscheibe 4 in Bremsanlegerichtung erstreckenden radial nach außen offenen Nuten 26 auf. Die Bremsbeläge 10,11 sind an den Tragarme 39,40 verschiebbar geführt und in Umfangsrichtung der Bremsscheibe 4 derart formschlüssig mit den Tragarmen 39,40 verbunden, daß zumindest bei höheren Bremsanlegekräften die an den Bremsbacken auftretenden Umfangskräfte auf beide Tragarme 39,40 übertragen werden. In dem Tragarm 40 ist ein Bolzen 41 verschraubt, der identisch mit dem Bolzen 16 ist. Das Gehäuse 2 weist den Gehäusearm 17 und einen weiteren Gehäusearm 42 mit einer Bohrung 43 auf. Die Bohrungen 18 und 43, auch Augen genannt, sind gleich groß. In der Bohrung 43 sind zwischen dem Bolzen 41 und dem Gehäusearm 42 zwei Metallhülsen 44, auch Bolzenführung genannt, angeordnet, die bei Bremsbetätigung mit dem Gehäuse 2 auf dem Bolzen 41 gleiten. Am äußeren Ende 45 des Bolzens 41 ist eine elastische Dichtungskappe 46 angeordnet, die die Führung gegen Schmutz und Nässe schützt und den Bolzen 41 dichtend umschließt. Zwischen dem Gehäusearm 42 des Gehäuses 2 und dem Tragarm 40 des Bremsträgers 3 ist eine gummiartige Dichtungsmanschette 47 angeordnet, die den Bolzen 41 zwischen dem Bremsträger 3 und dem Gehäuse 2 schützend ummantelt. Zum Aufklappen des Gehäuses 2 wird der Bolzen 16 aus dem Bremsträger 3 herausgeschraubt. Danach kann das Gehäuse 2 um den Bolzen 41 nach Lösen der Feder 23 geschwenkt werden. Die Bolzen 16 und 41 sind in den seitlich an dem Gehäuse 2 hervorspringenden Gehäusearmen 17 und 42 und den Tragarmen 39,40, also in Positionen so weit seitlich nach außen verlegt bzw. angeordnet, daß das Gehäuse 2 und der Bremsträger 3 beim Schwenken einander nicht hinderlich sind.

Fig. 4 zeigt eine Teilbelag-Scheibenbremse 50 mit einem in dem Bremsträger 3 fest eingepreßten Führungsbolzen 51. Das Gehäuse 2 weist an seinem Arm 52 eine lange Führung aus einer metallischen Schutzkappe 53 auf, in der der Bolzen 51 angeordnet ist. Zwischen dem Arm 52 und dem Bremsträger 3 ist eine gummiartige Schutzmanschette 54 angeordnet. Der Arm 52 des Gehäuses 2 weist zwei Bohrungen 55 und 56 auf, deren Mittelachsen identisch sind. Die Bohrung 56 ist im Bereich des Armes 52 angeordnet und kürzer als die Bohrung 55. Der Durchmesser der Bohrung 56 ist größer als der der Bohrung 55. Die Bohrung 56 dient zur Aufnahme einer Kunststoff- oder Metallhülse 57, die den Bolzen 51 ummantelt und einen Wulst 58 der Schutzmanschette 54, auch Faltenbalg genannt, in Anlage am Arm 52 hält. Ansonsten ist die Teilbelag-Scheibenbremse 50 wie die Teilbelag-Scheibenbremse 1 aufgebaut.

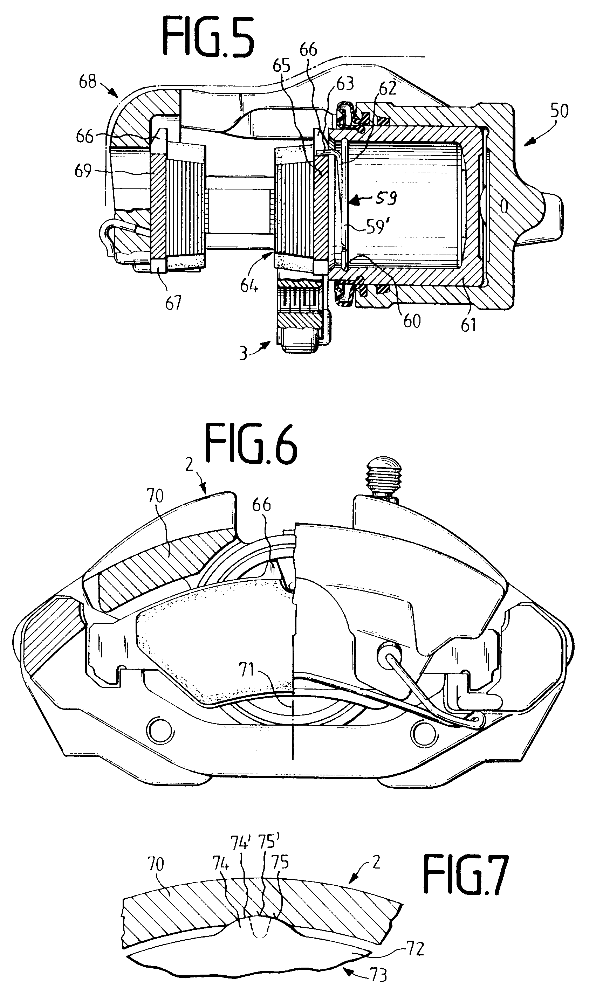

Fig. 5 zeigt die Teilbelag-Scheibenbremse 50 mit einer Kolbenfeder 59. Die Drahtfeder 59 ist kreisringförmig bzw. spiralförmig und mit einem zu dem Kreis geformten Ringteil 59' federnd in einer Nut 60 eines Kolbens 61 eingesetzt. Ein Schenkel 62 der Kolbenfeder 59 ragt aus dem Kolben 61 heraus und verklemmt mit seinem Ende 63 einen direkt betätigten Bremsbelag 64 gegen den Bremsträger 3 bzw. drückt mit seinem Ende 63 den kolbenseitigen Bremsbelag 64 gegen den Bremsträger 3. Der Bremsbelag 64 weist eine Trägerplatte 65 mit zwei trapezförmigen Vorsprüngen 66 auf. Die Vorsprünge 66 des außenliegenden Bremsbelags 67 dienen dazu, das Gehäuse 68 bei Bremsbetätigung über die Trägerplatte 69 des Bremsbelages 67 am Bremsträger 3 abzustützen. Die Gehäusebrücke weist zwei trapezförmige Nuten, auch Ausnehmungen genannt, auf, in die die Vorsprünge 66 eingreifen. Die Vorsprünge 66 ersetzen die Bolzen 36.

Fig. 6 zeigt einen der Vorsprünge 66. Die Vorsprünge 66 sind mittig im Bereich einer Gehäusebrücke 70 des Gehäuses 2 angeordnet. Der zweite Vorsprung 66 ist symmetrisch und spiegelbildlich zur Symmetrieachse 71 angeordnet und in dieser Figur nicht sichtbar.

Fig. 7 zeigt eine dritte Lösungsmöglichkeit zur Abstützung des Gehäuses 2 über eine Trägerplatte 72 eines äußeren Bremsbelages 73 am Bremsträger 3. Dabei weist die Trägerplatte 72 einen kreissektorförmigen Vorsprung 74 auf, der in eine entsprechende kreissektorförmige Nut 75, auch Ausnehmung genannt, des Gehäuses 2 formschlüssig eingreift. Auch dieser Vorsprung 74 ist mittig im Bereich der Gehäusebrücke 70 angeordnet. Dabei ist der Radius des Vorsprunges 74 geringfügig kleiner als der Radius der Nut 75, so daß das Gehäuse 2 in Punktauflage in Höhe der Symmetrieachse 71 über die Trägerplatte 72 an dem Bremsträger 3 abgestützt ist. Dabei stützen sich eine obere Stirnfläche 74' des Bremsbelages 73 und eine Gehäusefläche 75' der Gehäusebrücke 70 aneinander ab, so daß das gesamte Gehäuse 2 in Dreipunktauflage, einmal an dieser Bremsbelagabstützung und zweimal an der Bolzenführung abgestützt ist. Damit weist das Gehäuse 2 vorteilhaft eine zentrische Führung zur Abstützung auf dem Bremsbelag 73 auf.

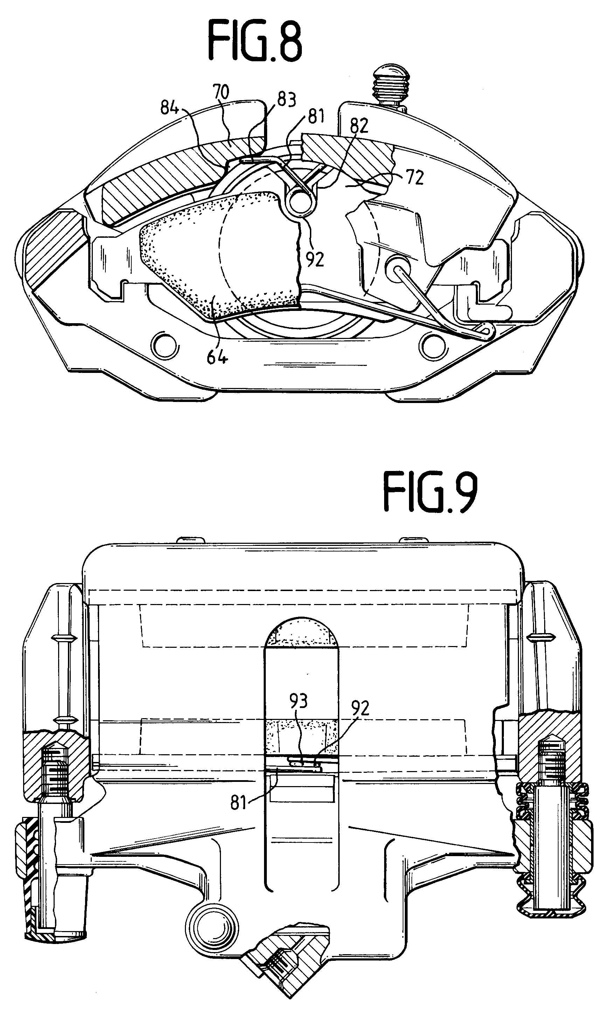

Fig. 8 zeigt eine weitere Möglichkeit zum Verklemmen des Bremsbelags 64 gegen den Bremsträger 3 mit einer Feder 81. Die Feder 81 ist mit einem spiralförmigen Abschnitt 92 in einer Ausnehmung 82 an der Trägerplatte 72 eingesetzt und greift mit ihren oberen Federenden 83 in eine Ausnehmung 84 der Gehäusebrücke 70 ein und verspannt dadurch den Bremsbelag 64.

Fig. 9 zeigt eine Draufsicht auf eine Teilbelag-Scheibenbremse mit der Feder 81. Der spiralförmige Abschnitt 92 weist zwei kreisförmige Segmente und zwischen den kreisförmigen Segmenten einen Verbindungssteg 93 auf.

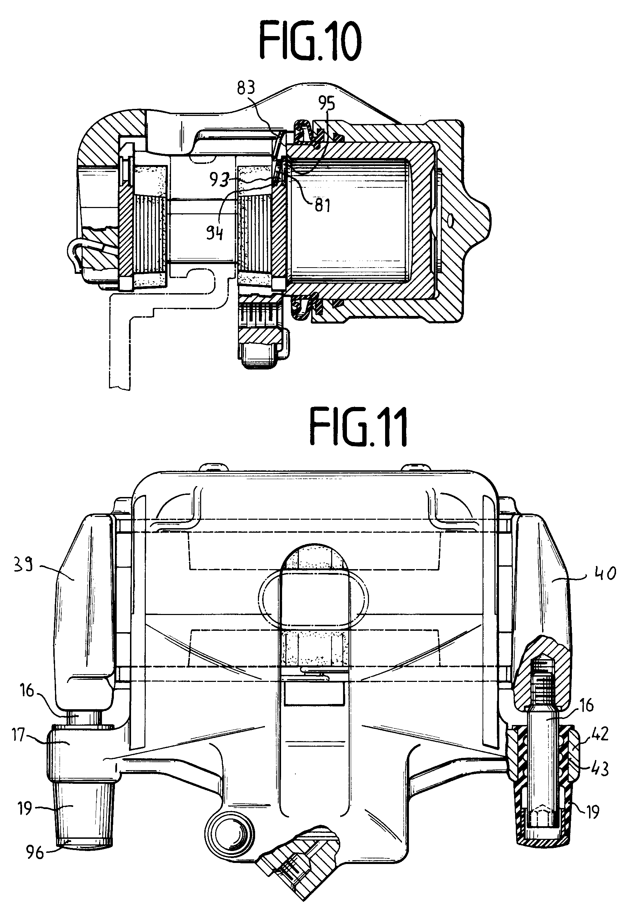

Fig. 10 zeigt eine Seitenansicht auf die Teilbelag-Scheibenbremse mit der Feder 81. Die beiden kreisförmigen Segmente 94,95 sind durch den Verbindungssteg 93 miteinander verbunden, und an den entgegengesetzten Enden schließen sich an die kreisförmigen Segmente die Federenden 83 an.

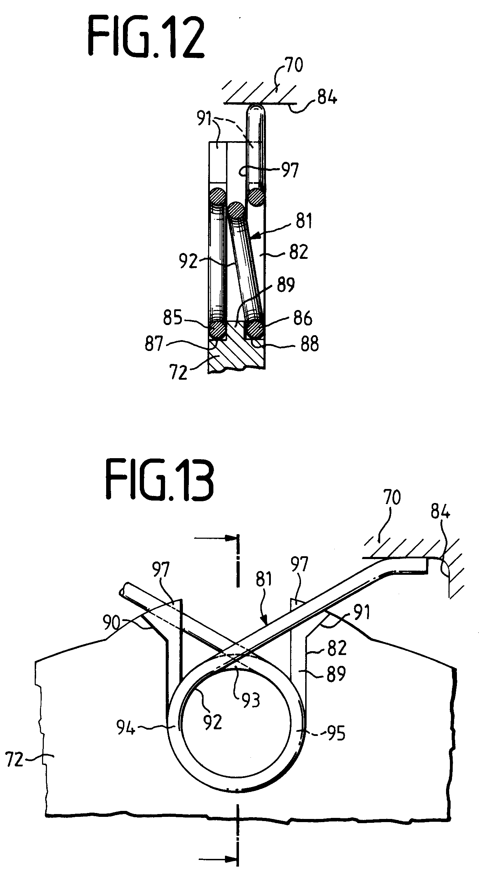

Fig. 11 zeigt eine Teilbelag-Scheibenbremse mit zwei gleichen Bolzen 16, die in den Tragarmen 39,40 verschraubt sind. Beide Bolzen 16 sind in gleichen Dämpfungshülsen 19 in den Bohrungen 18,43 der Gehäusearme 17,42 gelagert. Die Dämpfungshülsen 19 werden mit einer Kappe 96 verschlossen.

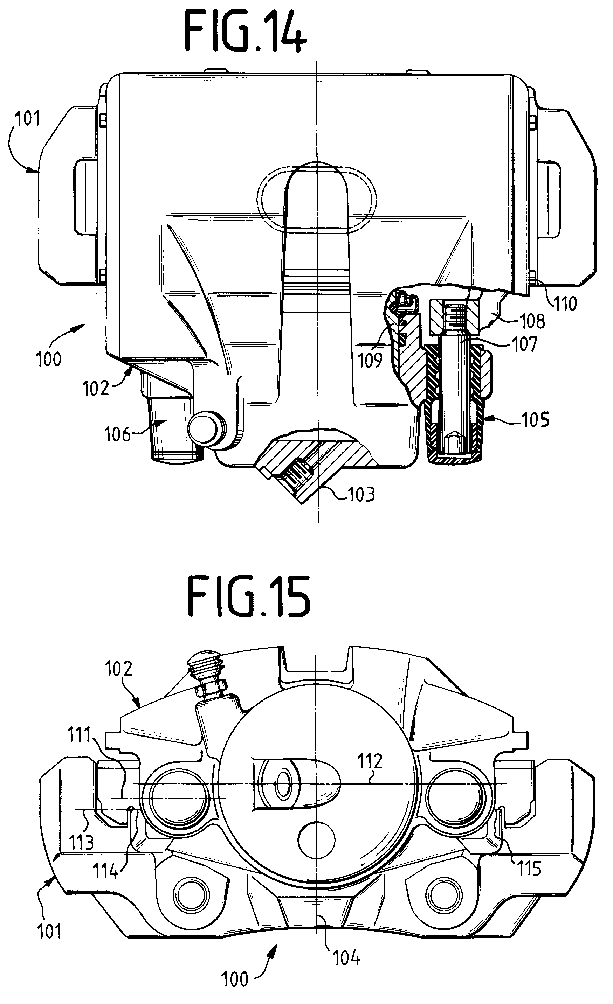

Fig. 12 und 13 zeigen die Ausbildung einer Trägerplatte 72 zur Aufnahme einer Feder 81, die sich an der Gehäusebrücke 6,70 in einer Ausnehmung 84 abstützt. Die unteren Abschnitte 85,86 sind Bestandteile der kreisförmigen Segmente 94,95 der Feder 81. Sie sind auf Flächen 87,88 der Trägerplatte 72 abgestützt und seitwärts eines U-förmigen Vorsprungs 89 angeordnet. Vorteilhaft weist die Trägerplatte 72 am Vorsprung 89 eine Verbreiterung mit Konusflächen 90,91 auf. Die Anlageflächen 97 für eine zusätzliche seitliche Abstützung der Feder 81 sind parallel zur Bremsfläche des Bremsbelages.

Fig. 14,15 und 16 zeigen eine Teilbelag-Scheibenbremse 100 mit einem Bremsträger 101 und einem Gehäuse 102. Da die Scheibenbremse 100 symmetrisch zu einer durch die beiden Symmetrieachsen 103 und 104 bestimmten Ebene aufgebaut ist, wird nur eine von zwei Bolzenführungen 105 und 106 beschrieben. Ein Bolzen 107 der Bolzenführung 105 ist in einem Auge 108 des Bremsträgers 101 verschraubt. Das Auge 108 ist in axialer Richtung hinter einem Kolben 109 angeordnet, so daß das Auge dem direkt betätigten Bremsbelag 110 nicht hinderlich ist. Gleichzeitig liegt das Auge 108 in einer Horizontalebene 111, die zwischen einer Horizontalebene 112, die durch die Zylinderachse der Betätigungseinheit vorgegeben ist, und einer Horizontalebene 113, die durch radiale Abstützpunkte 114 und 115 der Trägerplatte an dem Bremsträger 101 vorgegeben ist, liegt.

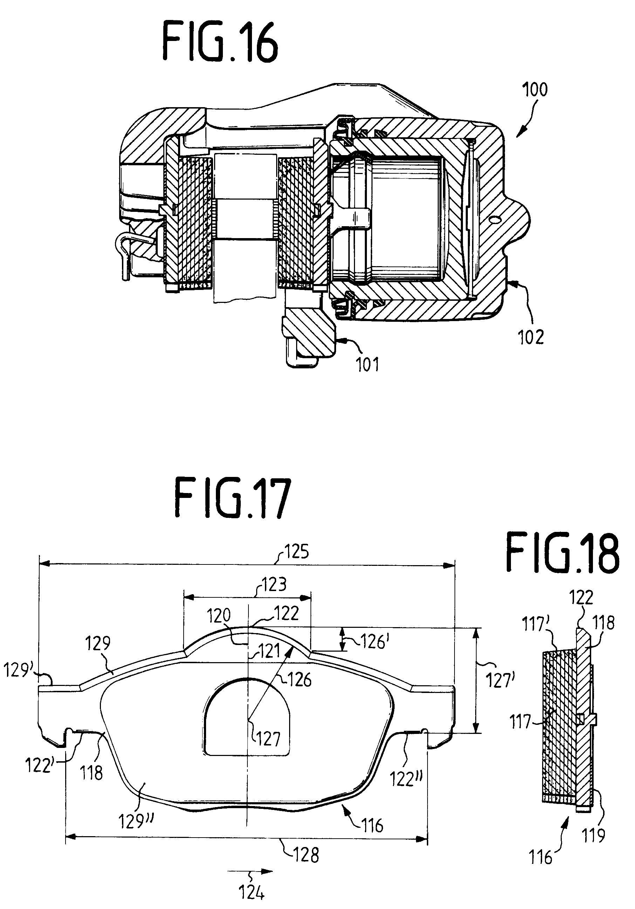

Fig. 17 und 18 zeigen einen Bremsbelag 116 mit einem Reibbelag 117, einer oberen Reibbelagkante 117', einer Trägerplatte 118 und einem Dämpfungsblech 119. Die Trägerplatte 118 weist einen kreissektorförmigen Vorsprung 120 auf, der symmetrisch zu einer Symmetrieachse 121 angeordnet ist. Im Idealfall stützt sich der Bremsbelag 116 punktförmig an seinem höchsten Punkt 122 ab, durch den die Symmetrieachse 121 verläuft. Der Vorsprung 120 ist kreissektorförmig ausgebildet und greift in eine kreissektorförmige Ausnehmung der Gehäusebrücke 70 ein. Eine Länge 123 des Vorsprungs 120 in Umfangsrichtung 124 liegt bei etwa einem Drittel der Gesamtlänge 125 des Bremsbelages 116 in Umfangsrichtung 124. Ein Radius 126 des Vorsprungs 120 weist eine Länge von 30 bis 36 mm auf. Der Mittelpunkt 127 zu dem Radius 126 des Vorsprungs 120 bei in die Scheibenbremse eingesetztem Bremsbelag 116 liegt in der Zylinderachse der Betätigungseinheit. Eine radiale Höhe 126' des Vorsprungs 120 liegt bei 13 mm. Ein radialer Versatz 127' zwischen den oberen und den unteren radialen Abstützpunkten 122,122',122'' liegt je nach Scheibenbremsgröße zwischen 32 und 45 mm. Die inneren Abstützflächen des radialen Vorsprungs für die Umfangskräfte weisen einen Abstand 128 von etwa 120 bis 150 mm auf. Eine Fase 129 an einer Oberseite 129' zu der Rückseite 129'' erleichtert das Anlegen des Bremsbelags 116 an den äußeren Schenkel der Teilbelag-Scheibenbremse.

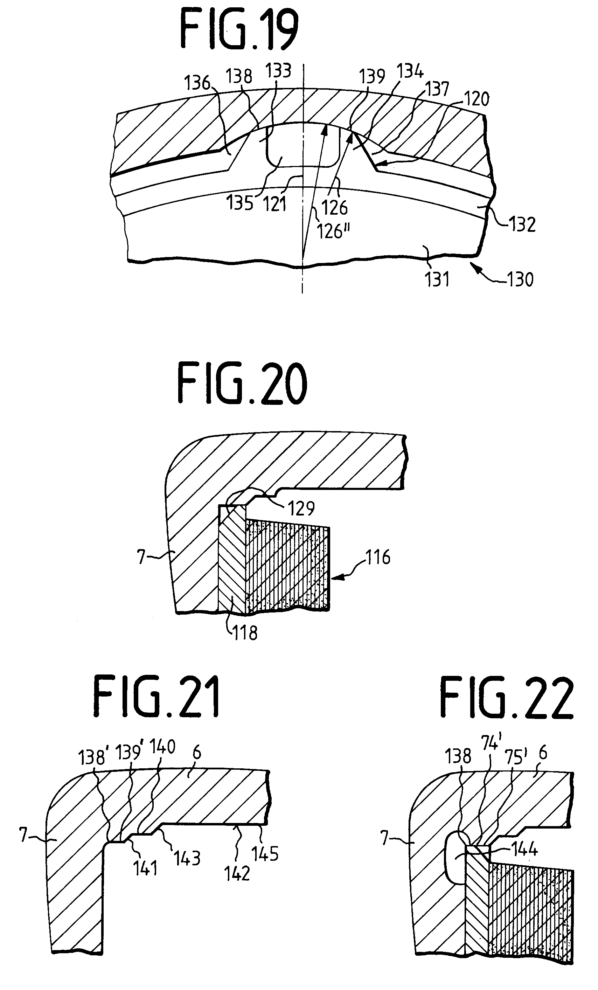

Fig. 19 zeigt einen Bremsbelag 130 mit einem Reibbelag 131 und einer Trägerplatte 132. Der Vorsprung 120 ist dabei in zwei trapezförmige Ansätze 133 und 134 unterteilt, in deren Mitte sich eine nutenförmige Ausnehmung 135 befindet. Auf dem der Ausnehmung 135 abgewandten Seite der Ansätze 133,134 sind zwei weitere Ausnehmungen 136,137 vorgesehen. Oberflächen 138,139 sind ebenfalls mit dem Radius 126 abgerundet. Der Radius 126 ist minus toleriert, der Brückenradius 126'' plus toleriert.

Fig. 20 zeigt den Bremsbelag 116 mit der Fase 129 und der Trägerplatte 118, angelegt an dem äußeren Schenkel 7 der Teilbelag-Scheibenbremse 1.

Fig. 21 zeigt eine Bearbeitung an einer Unterseite 145 der Gehäusebrücke 6. Ausgehend von einer inneren Knickkante 138' zwischen der Gehäusebrücke 6 und dem äußeren Schenkel 7 ist eine Ausnehmungsfläche 139' bearbeitet. Radial versetzt nach außen folgt eine weitere bearbeitete Ausnehmungsfläche 140. Zwischen den beiden Ausnehmungsflächen 139' und 140 ist eine Schlupffase 141 vorgesehen. Nach der bearbeiteten Ausnehmungsfläche 140 folgt eine Rohteilfläche 142, die über eine Schlupffase 143 in die bearbeitete Fläche 140 übergeht. Die Toleranzen der gegossenen Rohteilfläche 142 zu den bearbeiteten Flächen 139' und 140 sind so gewählt, daß maximal eine Schlupffase 143 entstehen kann, die so klein gewählt ist, daß der Bremsbelag 116 bei der ersten Bremsbetätigung über die Schlupffasen 143 und 141 an den äußeren Schenkel 7 anlegbar ist. Im Idealfall geht die Schlupffase 143 gegen Null bzw. ist nicht vorhanden.

Fig. 22 zeigt eine Teilbelag-Scheibenbremse 1 mit einem äußeren Schenkel 7 und einer Gehäusebrücke 6, die an der Knickkante 138' eine Tasche 144 aufweist. Diese Tasche 144 kann Korrosionsprodukte aufnehmen, so daß immer eine sichere Anlage zwischen den Flächen 74' und 75' gewährleistet ist.

Der zweite, in der Dämpfungshülse 19 gelagerte Bolzen 16 sorgt für einen Toleranzausgleich und bildet eine zweite Führungsachse. Bei diesem Sattelprinzip entfällt die bei anderen Teilbelag-Scheibenbremsen übliche seitliche Bearbeitung des Gehäuses 2 und folgende Vorteile werden möglich.
a) Leichtgängige, korrosionssichere Sattelführung.
b) Kostensenkung durch Entfall von Bearbeitungsvorgängen.
c) Erhöhung der Sattelsteifigkeit, da die Gehäusebrücke 6 deutlich verbreitert werden kann (Funktionsvorteil).
d) Vergrößerung der Belagfläche (längere Lebensdauer).
e) Anti-Lift Funktion (gegen das Anheben des Gehäuses 2 bei Bremsbetätigung) ist durch den langen Führungsbolzen 51 sichergestellt.
f) Die speziell gestaltete Kolbenfeder 59, die in die Nut 60 eingreift, drückt mit dem aus dem Kolben 61 ragenden Ende 63 auf die innere Trägerplatte 65. Es entfällt die sonst übliche Relativbewegung zwischen Kolbenfeder 59 und Gehäuse 2. Korrosion, Restmomente und Schrägverschleiß werden vermieden bzw. verringert.
g) Beim Belagwechsel muß nur der eingeschraubte Bolzen 16 aus dem Bremsträger 3 gedreht werden und das Gehäuse 2 kann durch die ganz nach außen verlegte Drehachse des Bolzen 41,51 aufgeklappt werden. Das Gehäuse 2 bleibt als Einheit erhalten - Servicevorteil - und die mit Lebensdauerfett gefüllten Bohrungen 43,55 des Traglagers werden nicht geöffnet.
   Weiterhin behält die im Kolben 61 montierte Kolbenfeder 59 ihre Position beim Belagwechsel bei, beeinträchtigt aber nicht den Klappvorgang und spannt beim Zuklappen des Gehäuses 2 automatisch den kolbenseitigen Bremsbelag 64 klapperfrei, aber leichtgängig, fest.
h) Durch die mittige, punktförmige Anlage des Gehäuses 2 auf der äußeren Trägerplatte 69 wird die Leichtgängigkeit der Gehäuseführung auch unter Umfangskraft sichergestellt.
   Gleichzeitig bildet diese Anlage den Abstützpunkt für den Angriff der Gehäusehaltefeder 23 und eine Bearbeitung für eine Gehäuseauflage/Trägerplatte entfällt.
i) Die Trägerplatten 12,13,69,72 finden beidseitig Verwendung.
j) Vorteilhaft kann eine billige Drahtfeder 81 Verwendung finden.

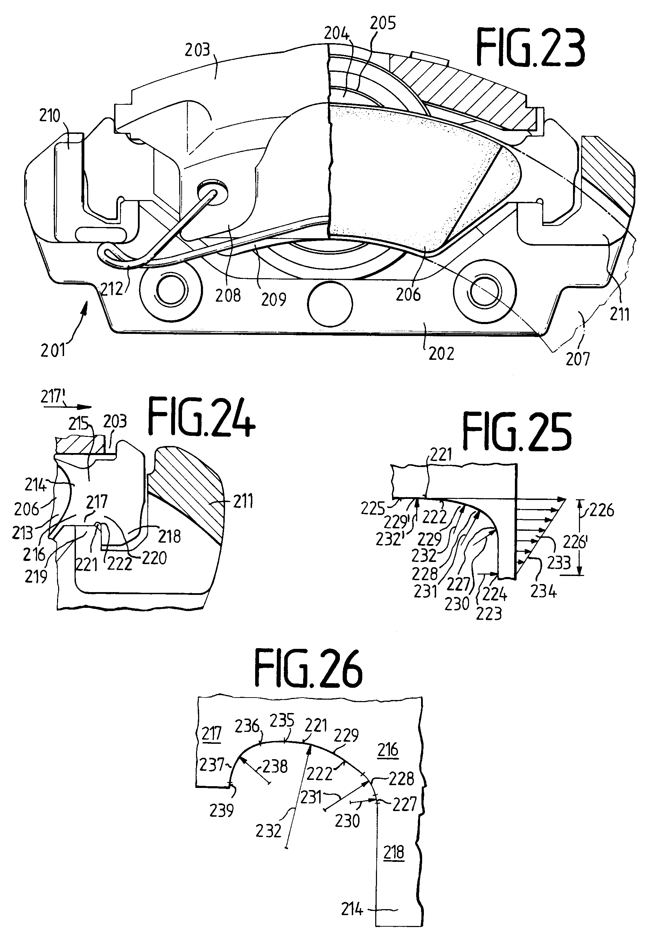

Die in den Fig. 23 bis 29 beschriebenen Ausführungsformen lassen es zu, einstückig ausgebildete, winklig zueinander angeordnete Teile an ihren innenliegenden Kanten so zu verbessern, daß ein nahezu gleichmäßiger Spannungsverlauf im Übergangsbereich erzielt wird und daß Spannungen, insbesondere Zugspannungen, abbaubar sind und eine frühzeitige Rißbildung bzw. ein frühzeitiges Auseinanderbrechen bei Grauguß o.ä. an diesen innenliegenden Kanten vermieden ist. Des weiteren soll Gewicht eingespart und die Lebensdauer erhöht werden. Es sollen keine Mehrkosten anfallen und kleinere Einbauräume ermöglicht werden.

Vorteile dieser Ausführungsformen werden nachfolgend beschrieben.

Vorteilhaft weist eine an einer Stoßstelle zwischen zwei winklig zueinander angeordneten, einstückig miteinander ausgebildeten Teilen (Schenkeln) innenliegende bogenförmige Kontur kontinuierlich oder abschnittsweise verschiedene Radien und, mit großem Radius beginnend, in Richtung auf einen Lastangriffspunkt abnehmend, kleinere Radien auf. Da bei Zunahme des Biegemomentes gleichzeitig die Kurvenwirkung abnimmt, ergibt sich ein gleichmäßiger Spannungsverlauf.

In einer vorteilhaften Ausführungsform ist die bogenförmige Kontur bei einer Kerbe verwendet, die in einem sich im wesentlichen in Umfangsrichtung erstreckenden Schenkel hineinragt. Durch die Kerben entstehen die örtlichen Spannungsüberhöhungen, sogen. Kerbspannungen. Mit einer optimierten Kerbform wird eine Spannungsreduktion erzielt, so daß die beiden in einer Übergangsstelle zusammentreffenden Schenkel bei Belastung nicht frühzeitig auseinanderbrechen oder auseinandergerissen werden. Durch den Abbau der Spannungsspitzen wird die Lebensdauer des Bauteils erhöht und es kann Gewicht eingespart werden. Weiterhin wird bei spröden Werkstoffen die Bruchlast erhöht. Bei konstantem Radius liegt das Spannungsmaximum etwa in der Kerbmitte. Daher wird im vorher hochbeanspruchten Bereich ein großer Radius und im vorher weniger beanspruchten Bereich ein kleiner, d.h. scharfer, Radius gewählt.

In einer weiteren vorteilhaften Ausführungsform begrenzt die bogenförmige Kontur einen radial nach innen hervorspringenden Abschnitt zwischen den beiden Schenkeln. In dieser Ausführungsform ist eine einfache Anordnung zwischen zwei senkrecht aufeinanderstehenden Flächen der beiden L-förmig zueinander angeordneten Schenkel erreicht.

In einer vorteilhaften Ausführungsform der Erfindung stützen sich die Schenkel der Trägerplatte ausschließlich außerhalb der bogenförmigen Kontur ab. Damit wird erzielt, daß die bogenförmige Kontur nicht durch den Steg des Bremsträgers verletzt wird.

In einer weiteren vorteilhaften Ausführungsform weist der Schenkel zwei Kerben auf, die einen Vorsprung begrenzen, der sich auf dem Steg des Bremsträgers abstützt. Durch die Anordnung der beiden Kerben um den Vorsprung herum kann der Vorsprung bearbeitet werden, so daß der Vorsprung problemlos auf dem Steg gleiten kann.

Des weiteren wird Schutz gesucht für die spezielle Ausgestaltung eines Bremsträgers, bei dem der Steg mit im wesentlichen senkrecht zueinander angeordneten Flächen den Bremsbelag abstützt. Der Steg weist an seinem radial außenliegenden Ende abgerundete oder abgeschrägte Kanten auf, so daß das Ende, im folgenden Spitze genannt, nicht in die bogenförmige Kontur der Trägerplatte eingreift, um diese bogenförmige Kontur nicht zu verletzen und mit minimaler Kontaktfläche die Trägerplatte berührt und somit gegen Korrosion vorbeugt. Gleichzeitig ist seitens der Trägerplatte ein größtmöglicher Radius erzielt. Insbesondere wird dabei auf die Ausführungsform eines Bremsträgers abgezielt, der in den Achsschenkel integriert ist. Integrierter Achsschenkel bedeutet, daß Bremsträger und Achsschenkel einteilig ausgeführt sind.

Nachfolgend sind vorteilhafte Ausführungsbeispiele der Erfindung anhand der Zeichnung näher erläutert. Es zeigen
- Fig. 23: einen Bremsbelag mit einer Trägerplatte, eingesetzt in den Bremsträger einer Teilbelag-Scheibenbremse,
- Fig. 24: einen L-förmigen Abschnitt der Trägerplatte in einem Bremsträger,
- Fig. 25: eine bogenförmige Kontur zwischen zwei senkrecht zueinander angeordneten Schenkeln mit kleinem Radius am Lastangriffspunkt beginnend und vom Lastangriffspunkt entfernend, mit größer werdenden Radien,
- Fig. 26: die bogenförmige Kontur in einer Kerbe,

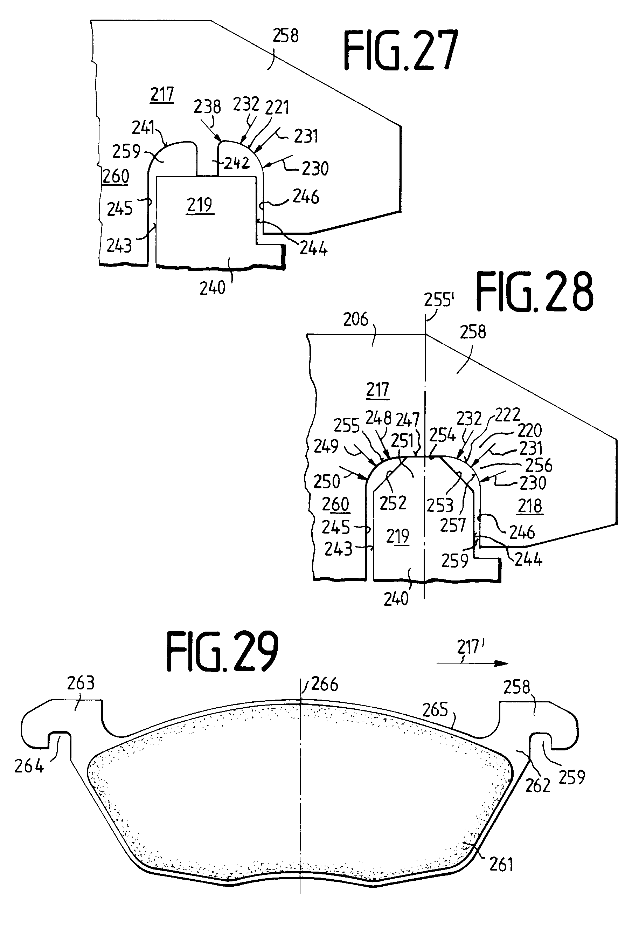

- Fig. 27: einen durch zwei Kerben begrenzten Vorsprung, der sich auf den Steg eines integrierten Achsschenkels abstützt,
- Fig. 28: eine bogenförmige Kontur zwischen zwei Schenkelflächen, die sich auf senkrecht zueinander stehenden, durch eine Schräge getrennten Schenkelflächen abstützt und
- Fig. 29: einen Bremsbelag für einen integrierten Bremsträger.

Fig. 23 zeigt eine Teilbelag-Scheibenbremse 201 mit einem Bremsträger 202, an dem axial gleitend ein Gehäuse 203 gelagert ist. Dazu weist das Gehäuse 203 eine Betätigungseinheit 204,205 aus Kolben 204 und Zylinder 205 auf, die einen ersten Bremsbelag 206 axial verschiebt und dabei gegen eine Bremsscheibe 207 drückt. Durch eine Reaktionskraft wird durch einen Schenkel 208 des Gehäuses 203 ein zweiter Bremsbelag 209 gegen die Bremsscheibe 207 gedrückt. Die beiden Bremsbeläge 206,209 sind axial verschiebbar an Tragarmen 210,211 geführt. Das Gehäuse 203 ist an seinem Schenkel 208 mit einer Feder 212 gegen den Bremsträger 202 an dessen Tragarmen 210,211 verspannt.

Fig. 24 zeigt einen Auschnitt aus der Teilbelag-Scheibenbremse 201 mit dem Bremsbelag 206, der einen Reibbelag 213 und eine Trägerplatte 214 aufweist. Die Trägerplatte 214 weist einen hammerkopfförmigen Bereich 215 auf, der seitlich in Umfangsrichtung endet. Der hammerkopfförmige Bereich 215 weist einen L-förmigen Abschnitt 216 mit zwei L-förmig zueinander angeordneten Schenkeln 217,218 auf. Der L-förmige Abschnitt 216 hintergreift einen sich axial erstreckenden, im wesentlichen radial nach außen gerichteten Steg 219 des Bremsträgers 202. An einer Stoßstelle 220, auch Übergangsstelle oder -bereich genannt, zwischen den beiden Schenkeln 217,218 ist eine Kerbe 221 mit einer bogenförmigen Kontur 222 angeordnet. Der Schenkel 217 erstreckt sich in Umfangsrichtung 217'.

Fig. 25 zeigt eine Prinzipskizze mit einem Ausschnitt aus einer Kerbe 221 und darin angeordnet die bogenförmige Kontur 222. Ein Lastangriffspunkt 224, an dem eine Kraft 223 angreift, und ein Kerbgrund 225 definieren einen Lastangriffshebel 226. Die bogenförmige Kontur 222 weist in den Abschnitten 227,228 und 229 verschiedene Radien 230,231 und 232 auf, die vom kleinsten Radius 230 beginnend über den Radius 231 bis zum Radius 232 mit der Entfernung vom Lastangriffspunkt 224 größer werden. Im Idealfall sollte sich im Abschnitt 229' ein unendlicher Radius 232' ergeben. Über den Lastangriffshebel 226 ergibt sich das Biegemoment 233. Eine Abnahme der Kerbwirkung durch die größeren Radien 231,232 und eine Zunahme des Biegemomentes 233 ergibt einen gleichmäßigen Spannungsverlauf 234. Die Erfindung eignet sich besonders bei gedrungener Bauweise, d.h. eine Strecke 226' des Lastangriffshebels 226 ist im Verhältnis zur Kerbgröße ähnlich groß. Die Kerbspannung wird umso kleiner, je größer der Kerbradius ist. Das Biegemoment 233 wächst linear zum Abstand vom Lastangriffspunkt 224.

Daraus folgt, bei gleicher Bauhöhe der Kerbe 221 ergibt sich die geringste Spannung, wenn der Kerbradius mit zunehmendem Abstand zum Lastangriffspunkt größer wird. Ideal ist ein kontinuierlicher Übergang. Eine Näherung ergibt sich bei gestuften Radien 230 bis 232 mit tangentialen Übergängen. Besonders bei Anwendung der Finite-Elemente-Methode kommt der sogenannten Tangentialspannung im Kerbgrund besondere Bedeutung zu. Die Tangentialspannung ist hinsichtlich einer Rißbildung ein maßgebender Parameter. Eine Optimierung ist hierbei unabhänig von der Beanspruchungsart (Biegung-, Zug-, Druckbeanspruchung etc.) möglich. Ein Optimierungskriterium ist hierbei, kleinstmögliche konstante Tangentialspannung gleichmäßig über den gesamten Kerbgrund zu verteilen. Zur Ermittlung der optimalen Kerbe können auch automatisch optimierende EDV-Programme Anwendung finden. In jedem Falle ist es sinnvoll, die bei der Optimierung erhaltenen Kurvenzüge durch geometrische Grundelemente (Kreis, Gerade etc.) anzunäheren, um Fertigung, Konstruktion und Qualitätskontrolle zu vereinfachen. Grunsätzlich ist jedoch auch die Darstellung beliebig gekrümmter Konturen möglich.

Fig. 26 zeigt die Trägerplatte 214 mit den beiden L-förmig angeordneten Schenkein 217,218 im L-förmigen Abschnitt 216. Die bogenförmige Kontur 222 der Kerbe 221 weist in dem Kurvenabschnitt 227 einen Radius 230, im Kurvenabschnitt 228 einen Radius 231 und im Kurvenabschnitt 229 einen Radius 232 auf. Dabei ist der Radius 230 klein, der Radius 231 größer und der Radius 232 am größten. Die bogenförmige Kontur 222 erstreckt sich von dem Abschnitt 227 bis zu einem Kulminationspunkt 235. Der Abschnitt 229 ersteckt sich bis zu einem Punkt 236. Von dem Punkt 236 vervollständigt ein Kurvenabschnitt 237 mit kleinerem Radius 238 und eine Gerade 239 die Kerbe 221.

Fig. 27 zeigt den Steg 219 eines Bremsträgers 240, auf dem der Bremsbelag axial gleitet. Der Schenkel 217 weist zwei Kerben 221,241 auf, die einen Vorsprung 242 begrenzen, der sich auf dem Steg 219 des Bremsträgers 240 abstützt. Die Kerbe 221 weist die Radien 230,231 und 232 auf. Der Steg 219 ist dabei rechteckförmig mit Seitenflächen 243,244 ausgebildet. Diese Seitenflächen 243,244 treten mit Trägerplattenflächen 245,246 bei Bremsbetätigung in Eingriff, wobei die Trägerplattenfläche 246 einen Lastangriffsbereich bildet. Diese Anordnung eignet sich besonders vorteilhaft bei integrierter Bauweise des Bremsträgers 240, wenn dieser einteilig mit einem Achsschenkel ausgebildet ist.

Fig. 28 zeigt eine weitere vorteilhafte Ausführungsform für einen integrierten Achsschenkel. Zwischen den beiden L-förmig zueinander angeordneten Schenkeln 217 und 218 ist die bogenförmige Kontur 222 mit den drei Radien 230 bis 232 vorgesehen. Hierbei geht die bogenförmige Kontur 222 direkt (ohne Ausbildung eines Vorsprunges 242) in eine Schenkelfläche 247 über. An die Schenkelfläche 247 schließt sich eine weitere bogenförmige Kontur 255 mit Radien 248 bis 250 an, wobei der Radius 248 der größte und der Radius 250 der kleinste ist, so daß die Konturen 222,255 spiegelbildlich zu einer Symmetrieachse 255' sind, weil eine Lagerreaktion auch bei Aufweitung vernachlässigbar ist. Der Steg 219 weist eine solche Spitze 251 mit abgeschrägten Flächen 252,253 auf, daß die Oberflächen 243,244,252,253 und 254 nicht in die bogenförmigen Konturen 222 und 255 eingreifen, um diese nicht zu verletzen. Ohne eine Abschrägung würden Spannungsspitzen in einer Kontaktzone entstehen. An der Stoßstelle 220 begrenzt die bogenförmige Kontur 222 einen dreieckförmigen, radial nach innen hervorspringenden Abschnitt 256, wobei eine Grundfläche 257 des Abschnitts 256 gemäß der bogenförmigen Kontur 222 gebogen ist. Die gerade Fläche 254 des Steges 219 stützt sich auf der Schenkelfläche 247 des Schenkels 217 ab. Die Flächen 243 und 244 treten bei Bremsbetätigung mit den Flächen 245 und 246 in Eingriff. Dabei ist vorteilhaft ein Push-Pull-Prinzip verwirklicht, bei dem bei Vorwärtsfahrt zunächst der Bremsbelag gegen den Steg 219 gedrückt, d.h. die Flächen 243 und 245 treten miteinander in Eingriff, und bei stärkerer Bremsbetätigung der Bremsbelag gegen den Steg 219 gezogen wird, d.h. die den Flächen 244,246 entsprechenden Flächen auf der in Umfangsrichtung gegenüberliegenden Seite des Bremsbelags 206 treten miteinander in Eingriff. Ebenso vorteilhaft kann aus Verschleiß- und Komfortgründen ein Pull-Push Prinzip verwirklicht werden.

Die Figuren 27 und 28 zeigen einen seitlich in Umfangsrichtung 217' endenden Trägerplattenbereich 258, der eine U-förmige Ausnehmung 259 aufweist, die von den Schenkeln 217,218 und einem weiteren, parallel zu dem Schenkel 218 angeordneten Schenkel 260 begrenzt ist. Diese Anordnung eignet sich vorteilhaft für eine integrierte Bauweise.

Fig. 29 zeigt einen Bremsbelag 261 für einen integrierten Bremsträger 240. Der Bremsbelag 261 weist eine Trägerplatte 262 mit dem seitlich in Umfangsrichtung 217' endenden, auf einer Oberkante 265 der Trägerplatte 262 angeordneten Trägerplattenbereich 258 mit der Ausnehmung 259 und auf einer in der Umfangsrichtung 217' entgegengesetzten Seite einen Trägerplattenbereich 263 mit einer Ausnehmung 264 auf. Der Bremsbelag 261 ist spiegelsymmetrisch zu einer Symmetrieachse 266.

Vorteilhaft kann eine Kerboptimierung an allen Teilen der Bremse, nämlich an Gehäusen, Bremsträgern, Bremsbelägen, Bolzen, Federn und Räumprofilen Verwendung finden.

## Patentansprüche

1. Teilbelag-Scheibenbremse, insbesondere für Kraftfahrzeuge, mit einem eine Gehäusebrücke (6,70) aufweisendem Gehäuse (2,102) und einem Bremsträger (3,101), der zwei parallele und im Abstand voneinander angeordnete Tragarme (39,40) aufweist, und mit einem an den Tragarmen (39,40) in Bremsanlegerichtung verschiebbar geführten eine Trägerplatte (13,72,118,132) ausweisenden Bremsbelag (11,73,116,130,209), der in Richtung der Umfangskräfte formschlüssig mit den Tragarmen (39,40) verbunden ist, wobei die Tragarme (39,40) mit einander zugekehrten Flächen (28,30,34,35) einen nach außen offenen Schacht (26) zur Aufnahme und Führung des Bremsbelags (11,73,116,130,209) bilden, und wobei das Gehäuse (2,102) mittels Bolzenführungen auf Bolzen (16,41,51,107) axial verschiebbar angeordnet ist und mit einer an der Unterseite der Gehäusebrücke (6,70) angeordneten Fläche (75',139') über die Trägerplatte (72,118,132) des äußeren Bremsbelages (73,116,130) an dem Bremsträger (3,101) radial abgestützt ist, dadurch **gekennzeichnet,** daß ein in der Symmetrieachse (103,104,121) der Bremse (1,100) liegender Vorsprung (74,120,133,134) der Trägerplatte (13,72,118,132) das Gehäuse (2,102) mittig abstützt.

2. Teilbelag-Scheibenbremse nach Anspruch 1, dadurch **gekennzeichnet,** daß der Vorsprung (74,120) kreissektorförmig - vorzugsweise halbkreisförmig - ausgebildet ist und in eine kreissektorförmige Nut (75) der Gehäusebrücke (6,70) eingreift, deren Radius (126'') größer als der Radius (126) des Vorsprungs (74,120) ist.

3. Teilbelag-Scheibenbremse nach Anspruch 1 oder 2, dadurch **gekennzeichnet,** daß mindestens eine nutenförmige Ausnehmung (135) den Vorsprung (133,134) in mindestens zwei trapezförmige Ansätze (133,134) unterteilt.

4. Teilbelag-Scheibenbremse nach einem der vorhergehenden Ansprüche, dadurch **gekennzeichnet,** daß die Trägerplatte (118) an der in Umfangsrichtung verlaufenden Oberseite eine Fase (129) zu der dem Reibbelag (117) abgewandten Rückseite (129'') aufweist.

5. Teilbelag-Scheibenbremse nach einem der vorhergehenden Ansprüche, dadurch **gekennzeichnet,** daß das Gehäuse (2,102) an der Knickkante (138') zwischen Gehäusebrücke (6) und Schenkel (7) eine Tasche (144) im Bereich des Vorsprungs (74) aufweist.

6. Teilbelag-Scheibenbremse nach einem der vorhergehenden Ansprüche, dadurch **gekennzeichnet,** daß die Gehäusebrücke (6) zwei axial und radial versetzte Ausnehmungsflächen (139',140) aufweist, die durch eine Fase (141) getrennt sind.

7. Teilbelag-Scheibenbremse nach Anspruch 6, dadurch **gekennzeichnet**, daß die Ausnehmungsflächen (139',140) der Gehäusebrücke (6) bearbeitet sind.

8. Teilbelag-Scheibenbremse, nach einem der vorhergehenden Ansprüche, dadurch **gekennzeichnet,** daß die Kontur (12a,48,49) des Bremsbelages (10,11) außerhalb eines Schwenkbereiches des Gehäuses (2) liegt und daß das Gehäuse (2) um einen der Bolzen (16,41,51) schwenkbar ist.

9. Teilbelag-Scheibenbremse nach Anspruch 8, dadurch **gekennzeichnet,** daß das Gehäuse (2) seitlich hervorspringende Gehäusearme (17,42,52) mit Bohrungen (18,43,56) aufweist, in denen die Bolzen (16,41,51) angeordnet sind.

10. Teilbelag-Scheibenbremse nach einem der vorhergehenden Ansprüche, dadurch **gekennzeichnet,** daß der Bremsträger (101) in Axialrichtung hervorspringende Augen (108) mit Bohrungen aufweist, in denen die Bolzen (107) angeordnet sind.

11. Teilbelag-Scheibenbremse nach einem der vorhergehenden Ansprüche, dadurch **gekennzeichnet,** daß der Bolzen (51) fest in dem Bremsträger (3) eingepreßt ist.

12. Teilbelag-Scheibenbremse nach einem der Ansprüche 1 bis 11, dadurch **gekennzeichnet,** daß das Gehäuse (2) eine metallische Schutzkappe (53) aufweist, in der der Bolzen (51) angeordnet ist.

13. Teilbelag-Scheibenbremse nach Anspruch 9, dadurch **gekennzeichnet,** daß in der Bohrung (43) zwischen dem Bolzen (41) und dem Gehäusearm (42) eine Metallhülse (44) angeordnet ist.

14. Teilbelag-Scheibenbremse nach einem der vorhergehenden Ansprüche, dadurch **gekennzeichnet,** daß die Bolzen (16,41) identisch sind.

15. Teilbelag-Scheibenbremse nach einem der vorhergehenden Ansprüche, dadurch **gekennzeichnet,** daß der Bolzen (16,41) im Bremsträger (3) verschraubt ist.

16. Teilbelag-Scheibenbremse nach einem der vorhergehenden Ansprüche, dadurch **gekennzeichnet,** daß eine Dichtungskappe (46) an einem äußeren Ende (45) des Bolzens (41) angeordnet ist.

17. Teilbelag-Scheibenbremse nach einem der vorhergehenden Ansprüche, dadurch **gekennzeichnet,** daß zwischen dem Gehäusearm (42) und dem Tragarm (40) eine Dichtungsmanschette (47) angeordnet ist.

18. Teilbelag-Scheibenbremse nach einem der vorhergehenden Ansprüche, dadurch **gekennzeichnet,** daß die äußere Trägerplatte (13) auf ihrer dem Reibbelag (15) gegenüberliegenden Seite Warzen (36) aufweist.

19. Teilbelag-Scheibenbremse, nach einem der vorhergehenden Ansprüche, dadurch **gekennzeichnet,** daß der direkt betätigte Bremsbelag (64) von einer spiralförmigen Kolbenfeder (59) gesichert ist und daß ein Ringteil (59') der Kolbenfeder (59) in einer Nut (60) eines Kolbens (61) eingesetzt ist.

20. Teilbelag-Scheibenbremse nach einem der vorhergehenden Ansprüche, dadurch **gekennzeichnet,** daß eine Feder (81) in eine Ausnehmung (82) der Trägerplatte (72) eingesetzt ist und mit oberen Enden (83) in eine Ausnehmung (84) der Gehäusebrücke (6,70) eingreift.

21. Teilbelag-Scheibenbremse nach Anspruch 20, dadurch **gekennzeichnet,** daß die Trägerplatte (72) Anlageflächen (97) zur seitlichen Abstützung der Feder (81) aufweist.

22. Teilbelag-Scheibenbremse nach Anspruch 11 oder 12 in Verbindung mit Anspruch 15, dadurch **gekennzeichnet,** daß das Gehäuse (2) um den eingepreßten Bolzen (51) schwenkbar ist, daß der eingepreßte Bolzen (51) länger als der verschraubte Bolzen (16,41) ist und daß die metallische Schutzkappe (53) eine lange Führung für den eingepreßten Bolzen (51) ist.

23. Teilbelag-Scheibenbremse nach einem der vorhergehenden Ansprüche, dadurch **gekennzeichnet,** daß die Trägerplatte (12,13,72) an in Umfangsrichtung beabstandeten Enden (24,31) hakenförmige Bereiche (24,31) mit radial nach innen neigenden Vorsprüngen (25,25') aufweist, die in die Nuten (26) der Tragarme (39,40,210,211) des Bremsträgers (3,101,202) eingreifen.

24. Teilbelag-Scheibenbremse nach Anspruch 23, dadurch **gekennzeichnet**, daß die oberen Kanten (48,49) der hakenförmigen Bereiche (24,31), die den Vorsprüngen (25) gegenüberliegen, mit einer Trägerplattenkante (12a) im wesentlichen fluchten.

25. Bremsbelag für eine Teilbelag-Scheibenbremse nach einem der Ansprüche 2 bis 11, mit einem Reibbelag und einer Trägerplatte (72), dadurch **gekennzeichnet**, daß die Trägerplatte (72) an der in Umfangsrichtung verlaufenden Oberseite einen in der Symmetrieachse (71) des Bremsbelages (73,116,130) angeordneten kreissektorförmigen Vorsprung (74) aufweist.

26. Bremsbelag nach Anspruch 25, dadurch **gekennzeichnet,** daß die Trägerplatte (12,13,72) an in Umfangsrichtung beabstandeten Enden (24,31) hakenförmige Bereiche (24,31) mit Vorsprüngen (25) aufweist, die in die Nuten (26) der Tragarme (39,40,210,211) des Bremsträgers (3,101,202) eingreifen.

27. Bremsbelag nach Anspruch 26, dadurch **gekennzeichnet,** daß die oberen Kanten (48,49) der hakenförmigen Bereiche (24,31), die den Vorsprüngen (25) gegenüberliegen, mit einer Trägerplattenkante (12a) im wesentlichen fluchten.

28. Bremsbelag nach Anspruch 25, dadurch **gekennzeichnet,** daß mindestens eine Ausnehmung (135) in den Vorsprung (133,134) eingreift, die den Vorsprung (133,134) in zwei mindestens trapezförmige Ansätze (133,134) unterteilt.

29. Bremsbelag nach einem der Ansprüche 25 bis 28, dadurch **gekennzeichnet,** daß die Trägerplatte an der in Umfangsrichtung (124) verlaufenden Oberseite (129') eine Fase (129) zu der Rückseite (129'') aufweist.

30. Bremsbelag nach einem der Ansprüche 25 bis 29, dadurch **gekennzeichnet,** daß der Vorsprung (120) eine sich in Umfangsrichtung (124) erstreckende Länge (123) aufweist, die zwischen einem Fünftel und einem Halben, insbesondere bei einem Drittel, der Gesamtlänge (125) des Bremsbelages (116) in Umfangsrichtung (124) liegt.

31. Bremsbelag nach einem der Ansprüche 25 bis 30, dadurch **gekennzeichnet,** daß der Vorsprung (120) einen Radius (126) von 25 - 40 mm, insbesondere von 30 - 36 mm, aufweist.

32. Bremsbelag nach einem der Ansprüche 25 bis 31, dadurch **gekennzeichnet,** daß der Mittelpunkt (127) zu dem Radius (126) des Vorsprungs (120) bei in die Scheibenbremse eingesetztem Bremsbelag (116) in der Zylinderachse der Betätigungseinheit liegt.

33. Bremsbelag nach einem der Ansprüche 25 bis 32, dadurch **gekennzeichnet,** daß die radiale Höhe (126') des Vorsprungs (120) über der oberen Reibbelagkante (117') maximal 20 mm, insbesondere 13 mm, beträgt.

34. Bremsbelag nach einem der Ansprüche 25 bis 33, dadurch **gekennzeichnet,** daß der radiale Versatz (127') zwischen radialen Abstützpunkten (122,122',122'') der Trägerplatte (118) für den Bremsträger (3,101) und das Gehäuse (2,102) einen Abstand (127') von 30 - 50 mm, insbesondere von 32 - 45 mm, aufweist.

35. Bremsbelag nach einem der Ansprüche 25 bis 34, dadurch **gekennzeichnet,** daß innere Abstützflächen (29,34) der radial nach innen gerichteten Vorsprünge (25,25') für die Umfangskräfte einen Abstand (128) von 120 - 150 mm aufweisen.

36. Bremsbelag nach einem der Ansprüche 25 bis 35, mit einer Trägerplatte (214), mit einem L-förmigen Abschnitt (216) seitlich in Umfangsrichtung endet und mit dem Abschnitt (216) einen sich axial erstreckenden im wesentlichen radial nach außen gerichteten Steg (219) eines Bremsträgers (202,240) hintergreift, wobei der L-förmige Abschnitt (216) aus zwei Schenkeln (217,218) gebildet ist, die an einer Stoßstelle (220) eine innenliegende, bogenförmige Kontur (222,255) aufweisen, dadurch **gekennzeichnet,** daß die bogenförmige Kontur (222,255), insbesondere abschnittweise, verschiedene Radien (230,231,232,248,249,250) und, mit großem Radius (232,248) beginnend, in Richtung auf einen Lastangriffspunkt (224) abnehmend, kleinere Radien (230,231,249,250) aufweist.

37. Bremsbelag nach Anspruch 36, dadurch **gekennzeichnet,** daß die bogenförmige Kontur (222,255) Teil einer Kerbe (221,241) ist, die in dem sich im wesentlichen in Umfangsrichtung (217') erstreckenden Schenkel (217) hineinragt.

38. Bremsbelag nach Anspruch 37, dadurch **gekennzeichnet,** daß die bogenförmige Kontur (222,255) einen radial nach innen hervorspringenden Abschnitt (256) zwischen den beiden Schenkeln (217,218,260) begrenzt.

39. Bremsbelag nach Anspruch 38, dadurch **gekennzeichnet,** daß die Schenkel (217,218,260) sich ausschließlich außerhalb der bogenförmigen Kontur (222,255) abstützen.

40. Bremsbelag nach einem der Ansprüche 38 oder 39, dadurch **gekennzeichnet,** daß der Schenkel (217) zwei Kerben (221,241) aufweist, die einen Vorsprung (242) begrenzen, der sich auf den Steg (219) des Bremsträgers (202) abstützt.

41. Bremsbelag nach einem der Ansprüche 38 oder 39, dadurch **gekennzeichnet,** daß der Schenkel (217) zwei bogenförmigen Konturen (222,255) aufweist, die insbesondere spiegelbildlich symmetrisch zu einer Symmetrieachse (255') angeordnet sind.

42. Bremsträger für eine Teilbelag-Scheibenbremse, insbesondere für Kraftfahrzeuge, mit zwei in Sekantenrichtung zur Bremsscheibe im Abstand voneinander angeordneten Tragarmen (210,211), die einen axial verlaufenden, im wesentlichen radial nach außen gerichteten Steg (219) aufweisen, der in einem seitlich in Umfangsrichtung endenden L-förmigen Abschnitt (216) einer Trägerplatte (214) eines Bremsbelags (206), der nach einem der vorhergehenden Ansprüche ausgebildet ist, verhakt, und der Steg (219) mit zumindest zwei im wesentlichen senkrecht zueinander angeordneten Flächen (244,254) den Bremsbelag (206) abstützt, dadurch **gekennzeichnet,** daß der Steg (219) an seinem radial außen liegenden Ende (251) abgerundete oder abgeschrägte Flächen (252,253) aufweist.

## Claims

1. A spot-type disc brake, in particular for automotive vehicles, comprising a housing (2, 102) having a housing bridge (6,70) and a brake carrier (3, 101) furnished with two carrying arms (39, 40) arranged in parallel and spaced from each other, and comprising a brake pad (11, 73, 116, 130, 209) which is slidably guided on the carrying arms (39, 40) in the direction of brake application and includes a carrier plate (13, 72, 118, 132), the said brake pad being positively connected with the carrying arms (39, 40) in the direction of the circumferential forces, the said carrying arms (39, 40) with facing surfaces (28, 30, 34, 35) forming an outwardly open aperture (26) to accommodate and guide the brake pad (11, 73, 116, 130, 209), and the housing (2, 102) being axially displaceably arranged on pins (16, 41, 51, 107) by means of pin guides and, with a surface (75', 139') arranged on the bottom side of the housing bridge (6, 70), being radially supported on the brake carrier (3, 101) via the carrier plate (72, 118, 132) of the external brake pad (73, 116, 130),
**characterised** in that a projection (74, 120, 133, 134) of the carrier plate (13, 72, 118, 132) lying in the axis of symmetry (103, 104, 121) of the brake (1, 100) centrically supports the housing (2, 102).

2. A spot-type disc brake as claimed in claim 1,
**characterised** in that the projection (74, 120) is of circle-sector-shaped - preferably semicircular - design and is engaged in a circle-sector-shaped groove (75) of the housing bridge (6, 70), whose radius (126'') is more than the radius (126) of the projection (74, 120).

3. A spot-type disc brake as claimed in claim 1 or 2,
**characterised** in that at least one groove-shaped recess (135) subdivides the projection (133, 134) into at least two trapezoidal extensions (133, 134).

4. A spot-type disc brake as claimed in any one of the preceding claims,
**characterised** in that, on its upper side extending in circumferential direction, the carrier plate (118) has a chamfer (129) in relation to the back side (129'') remote from the friction lining (117).

5. A spot-type disc brake as claimed in any one of the preceding claims,
**characterised** in that, at the kink (138') between housing bridge (6) and leg (7), the housing (2, 102) comprises a pocket (144) in the area of the projection (74).

6. A spot-type disc brake as claimed in any one of the preceding claims,
**characterised** in that the housing bridge (6) comprises two axially and radially offset recess surfaces (139', 140) which are isolated by a chamfer (141).

7. A spot-type disc brake as claimed in claim 6,
**characterised** in that the recess surfaces (139', 140) of the housing bridge (6) are machined.

8. A spot-type disc brake as claimed in any one of the preceding claims,
**characterised** in that the contour (12a, 48, 49) of the brake pad (10, 11) is disposed outside of a tilting range of the housing (2), and in that the housing (2) is pivotable about one of the pins (16, 41, 51).

9. A spot-type disc brake as claimed in claim 8,
**characterised** in that the housing (2) comprises laterally projecting housing arms (17, 42, 52) with bores (18, 43, 56) in which the pins (16, 41, 51) are arranged.

10. A spot-type disc brake as claimed in any one of the preceding claims,
**characterised** in that the brake carrier (101) is furnished with axially projecting lugs (108) with bores in which the pins (107) are arranged.

11. A spot-type disc brake as claimed in any one of the preceding claims,
**characterised** in that the pin (51) is fixedly pressed into the brake carrier (3).

12. A spot-type disc brake as claimed in any one of the claims 1 to 11,
**characterised** in that the housing (2) is provided with a metal protective cap (53) in which the pin (51) is arranged.

13. A spot-type disc brake as claimed in claim 9,
**characterised** in that a metal sleeve (44) is incorporated in the bore (43) between the pin (41) and the housing arm (42).

14. A spot-type disc brake as claimed in any one of the preceding claims,
**characterised** in that the pins (16, 41) are identical.

15. A spot-type disc brake as claimed in any one of the preceding claims,
**characterised** in that the pin (16, 41) is screwed into the brake carrier (3).

16. A spot-type disc brake as claimed in any one of the preceding claims,
**characterised** in that a sealing boot (46) is arranged on an outer end (45) of the pin (41).

17. A spot-type disc brake as claimed in any one of the preceding claims,
**characterised** in that a sealing cup (47) is arranged between the housing arm (42) and the carrying arm (40).

18. A spot-type disc brake as claimed in any one of the preceding claims,
**characterised** in that the outside carrier plate (13) is furnished with knobs (36) on its side opposite to the friction lining (15).

19. A spot-type disc brake as claimed in any one of the preceding claims,
**characterised** in that the direct-applied brake pad (64) is secured in position by a spiral-shaped piston spring (59), and in that an annular portion (59') of the piston spring (59) is inserted into a groove (60) of a piston (61).

20. A spot-type disc brake as claimed in any one of the preceding claims,
**characterised** in that a spring (81) is inserted into a recess (82) of the carrier plate (72) and, with upper ends (83), is engaged in a recess (84) of the housing bridge (6, 70).

21. A spot-type disc brake as claimed in claim 20,
**characterised** in that the carrier plate (72) comprises abutment surfaces (97) for laterally supporting the spring (81).

22. A spot-type disc brake as claimed in claim 11 or 12 in conjunction with claim 15,
**characterised** in that the housing (2) is pivotable about the pressed-in pin (51), in that the pressed-in pin (51) is longer than the screwed-in pin (16, 41), and in that the metallic protective cap (53) is a long guidance for the pressed-in pin (51).

23. A spot-type disc brake as claimed in any one of the preceding claims,
**characterised** in that, on ends (24, 31) spaced in circumferential direction, the carrier plate (12, 13, 72) is furnished with hook-shaped areas (24, 31) with radially inwardly inclined projections (25, 25') engaging into the grooves (26) of the carrying arms (39, 40, 210, 211) of the brake carrier (3, 101, 202).

24. A spot-type disc brake as claimed in claim 23,
**characterised** in that the upper edges (48, 49) of the hook-shaped areas (24, 31) which are opposite to the projections (25) substantially are in alignment with a carrier plate edge (12a).

25. A brake pad for a spot-type disc brake as claimed in any one of the claims 2 to 11 comprising a friction lining and a carrier plate (72),
**characterised** in that, on the upper side extending in circumferential direction, the carrier plate (72) comprises a circle-sector-shaped projection (74) which is arranged in the axis of symmetry (71) of the brake pad (73, 116, 130).

26. A brake pad as claimed in claim 25,
**characterised** in that, on ends (24, 31) spaced in circumferential direction, the carrier plate (12, 13, 72) is furnished with hook-shaped areas (24, 31) with projections (25) engaging into the grooves (26) of the carrying arms (39, 40, 210, 211) of the brake carrier (3, 101, 202).

27. A brake pad as claimed in claim 26,
**characterised** in that the upper edges (48, 49) of the hook-shaped areas (24, 31) which are opposite to the projections (25) substantially are in alignment with a carrier plate edge (12a).

28. A brake pad as claimed in claim 25,
**characterised** in that at least one recess (135) is engaged by the projection (133, 134) and sub-divides the projection (133, 134) into at least two trapezoidal extensions (133, 134).

29. A brake pad as claimed in any one of the claims 25 to 28,
**characterised** in that, on its upper side (129') extending in circumferential direction (124), the carrier plate comprises a chamfer (129) in relation to the back side (129'').

30. A brake pad as claimed in any one of the claims 25 to 29,
**characterised** in that the projection (120) has a length (123) extending in circumferential direction (124) which ranges between one fifth and one half, in particular is one third, of the entire length (125) of the brake pad (116) in circumferential direction (124).

31. A brake pad as claimed in any one of the claims 25 to 30,
**characterised** in that the projection (120) has a radius (126) of 25 to 40 mms, more particularly of 30 to 36 mms.

32. A brake pad as claimed in any one of the claims 25 to 31,
**characterised** in that, in relation to the radius (126) of the projection (120), the centre (127) is disposed in the cylinder axis of the actuating unit, with the brake pad (116) mounted into the disc brake.

33. A brake pad as claimed in any one of the claims 25 to 32,
**characterised** in that the radial height (126') of the projection (120) beyond the upper friction lining edge (117') amounts to maximally 20 mms, in particular 13 mms.

34. A brake pad as claimed in any one of the claims 25 to 33,
**characterised** in that the radial shift (127') between radial points of support (122, 122', 122'') of the carrier plate (118) for the brake carrier (3, 101) and the housing (2, 102) has a distance (127') of between 30 and 50 mms, in particular of between 32 and 45 mms.

35. A brake pad as claimed in any one of the claims 25 to 34,
**characterised** in that inward supporting surfaces (29, 34) of the radially inwardly directed projections (25, 25') for the circumferential forces are at a distance (128) of 120 to 150 mms.

36. A brake pad as claimed in any one of the claims 25 to 35 comprising a carrier plate (214) which ends with an L-shaped portion (216) sideways in circumferential direction and which engages with said portion (216) behind an axially extending, substantially radially outwardly directed web (219) of a brake carrier (202, 240), the L-shaped portion (216) being formed of two legs (217, 218) having an internal arcuate contour (222, 255) at a point of contact (220),
**characterised** in that this arcuate contour (222, 255), in particular sectionwise, has varying radii (230, 231, 232, 248, 249, 250), that is, starting with the large radius (232, 248), the radii (230, 231, 249, 250) become smaller as they decrease in the direction of a point of load application (224).

37. A brake pad as claimed in claim 36,
**characterised** in that the arcuate contour (222, 255) is part of a notch (221, 241) which projects into the leg (217) extending substantially in circumferential direction (217').

38. A brake pad as claimed in claim 37,
**characterised** in that the arcuate contour (222, 255) confines a radially inwardly projecting portion (256) between the two legs (217, 218, 260).

39. A brake pad as claimed in claim 38,
**characterised** in that the legs (217, 218, 260) are supported exclusively outside of the arcuate contour (222, 255).

40. A brake pad as claimed in any one of the claims 38 or 39,
**characterised** in that the leg (217) contains two notches (221, 241) which bound a projection (242) supported on the web (219) of the brake carrier (202).

41. A brake pad as claimed in any one of the claims 38 or 39,
**characterised** in that the leg (217) has two arcuate contours (222, 255) which are arranged in particular mirror-invertedly symmetrically in relation to an axis of symmetry (255').

42. A brake carrier for a spot-type disc brake, in particular for automotive vehicles, comprising two carrying arms (210, 211) which, in a secant's direction of the brake disc, are arranged at a distance from each other, which are furnished with an axially extending, substantially radially outwardly directed web (219) which is hooked in an L-shaped portion (216) of a carrier plate (214) of a brake pad (206) that ends sideways in circumferential direction, the said brake pad being designed as is claimed in any one of the preceding claims, and the web (219) supporting the brake pad (206) by way of at least two surfaces (244, 254) which are arranged substantially perpendicularly to each other,
**characterised** in that the web (219) includes rounded or chamfered surfaces (252, 253) at its radially outwardly lying end (251).

## Revendications

1. Frein à disque à garnitures partielles, notamment pour véhicule automobile, comprenant un boîtier (2, 102), comportant un pont de boîtier (6, 70), un support de frein (3, 101), comportant deux bras de support (39, 40) parallèles et disposés à distance l'un de l'autre, et une garniture de frein (11, 73, 116, 130, 209) qui est guidée sur les bras de support (39, 40) de façon à pouvoir se déplacer en translation suivant la direction d'application du frein et comporte une plaquette de support (13, 72, 118, 132) et qui est reliée par complémentarité de formes aux bras de support (39, 40) suivant la direction des forces circonférentielles, les bras de support (39, 40) constituant, avec des surfaces (28, 30, 34, 35) se faisant face, une cage (26) ouverte vers l'extérieur et servant à recevoir et guider la garniture de frein (11, 73, 116, 130, 209), tandis que le boîtier (2, 102) est disposé de façon à pouvoir se déplacer axialement en translation sur des tiges (16, 41, 51, 107) à l'aide de moyens de guidage de tige et, par une surface (75', 139') située sur la face inférieure du pont de boîtier (6, 70), prend appui radialement contre le support de frein (3, 101) par l'intermédiaire de la plaquette de support (72, 118, 132) de la garniture extérieure de frein (73, 116, 130), caractérisé en ce qu'une saillie (74, 120, 133, 134) de la plaquette de support (13, 72, 118, 132) qui est située sur l'axe de symétrie (103, 104, 121) du frein (1, 100) prend appui en son milieu sur le boîtier (2, 102).

2. Frein à disque à garnitures partielles suivant la revendication 1, caractérisé en ce que la saillie (74, 120) est réalisée en forme de secteur circulaire - de préférence en forme de demi-cercle - et s'emboîte dans une rainure en forme de secteur circulaire (75) du pont (6, 70) du boîtier dont le rayon (126') est supérieur au rayon (126) de la saillie (74, 120).

3. Frein à disque à garnitures partielles suivant la revendication 1 ou 2, caractérisé en ce qu'au moins un évidement (135) en forme de rainure divise la saillie (133, 134) en au moins deux talons trapézoïdaux (133, 134).

4. Frein à disque à garnitures partielles suivant l'une des revendications précédentes, caractérisé en ce que la plaquette de support (118) comporte, sur sa face supérieure s'étendant suivant la direction circonférentielle, un chanfrein (129) tourné vers sa face arrière (129'') qui est située à l'opposé de la garniture de friction (117).

5. Frein à disque à garnitures partielles suivant l'une des revendications précédentes, caractérisé en ce qu'à l'endroit de l'arête (138') du coude formé entre le pont (6) du boîtier et la branche (7), ce boîtier (2, 102) comporte un réceptacle (144) situé dans la zone de la saillie (74').

6. Frein à disque à garnitures partielles suivant l'une des revendications précédentes, caractérisé en ce que le pont (6) du boîtier comprend deux surfaces de logement (139', 140) décalées axialement et radialement et séparées par un chanfrein (141).

7. Frein à disque à garnitures partielles suivant la revendication 6, caractérisé en ce que les surfaces du logement (139', 140) du pont (6) du boîtier sont usinées.

8. Frein à disque à garnitures partielles suivant l'une des revendications précédentes, caractérisé en ce que le contour (12a, 48, 49) de la garniture de frein (10, 11) est situé à l'extérieur d'une zone de basculement du boîtier (2) et en ce que le boîtier (2) est agencé de façon à pouvoir basculer autour de l'une des tiges (16, 41, 51).

9. Frein à disque à garnitures partielles suivant la revendication 8, caractérisé en ce que le boîtier (2) comporte des bras de boîtier (17, 42, 52) qui font saillie latéralement et présentent des alésages (18, 43, 56) et dans lesquels les tiges (16, 41, 51) sont disposées.

10. Frein à disque à garnitures partielles suivant l'une des revendications précédentes, caractérisé en ce que le support de frein (101) comporte des oeils (108) qui font saillie suivant la direction axiale et dans lesquelles les tiges (107) sont disposées.

11. Frein à disque à garnitures partielles suivant l'une des revendications précédentes, caractérisé en ce que la tige (51) est emboîtée à force d'une manière fixe dans le support de frein (3).

12. Frein à disque à garnitures partielles suivant l'une des revendications 1 à 11, caractérisé en ce que le boîtier (2) comporte un capuchon métallique de protection (53) dans lequel la tige (51) est disposée.

13. Frein à disque à garnitures partielles suivant la revendication 9, caractérisé en ce que, dans l'alésage (43), une douille métallique (44) est disposée entre la tige (41) et le bras (42) du boîtier.

14. Frein à disque à garnitures partielles suivant l'une des revendications précédentes, caractérisé en ce que les tiges (16, 41) sont identiques.

15. Frein à disque à garnitures partielles suivant l'une des revendications précédentes, caractérisé en ce que la tige (16, 41) est vissée dans le support de frein (3).

16. Frein à disque à garnitures partielles suivant l'une des revendications précédentes, caractérisé en ce qu'un capuchon d'étanchéité (46) qui est disposé à une extrémité extérieure (45) de la tige (41).

17. Frein à disque à garnitures partielles suivant l'une des revendications précédentes, caractérisé en ce qu'un soufflet d'éfanchéité (47) est disposé entre le bras (42) du boîtier et le bras de support (40).

18. Frein à disque à garnitures partielles suivant l'une des revendications précédentes, caractérisé en ce que la plaquette extérieure de support (13) comporte des bossages (36) sur sa face située à l'opposé du côté de la garniture de friction (15).

19. Frein à disque à garnitures partielles suivant l'une des revendications précédentes, caractérisé en ce que la garniture de frein (64) actionnée directement est immobilisée par un ressort de piston (59) de forme spirale et en ce qu'une partie annulaire (59') du ressort de piston (59) est emboîtée dans une gorge (60) d'un piston (61).

20. Frein à disque à garnitures partielles suivant l'une des revendications précédentes, caractérisé en ce qu'un ressort (81) est emboîté dans un logement (82) de la plaquette de support (72) et exerce une action, par des extrémités supérieures (83) dans un évidement (84) du pont (6, 70) du boîtier.

21. Frein à disque à garnitures partielles suivant la revendication 20, caractérisé en ce que la plaquette de support (72) comporte des surfaces d'appui (97) servant à l'appui transversal du ressort (81).

22. Frein à disque à garnitures partielles suivant la revendication 11 ou 12 en combinaison avec la revendication 15, caractérisé en ce que le boîtier (2) est agencé de façon à pouvoir basculer autour de la tige (51) emboîtée à force, en ce que la tige (51) emboîtée à force est plus longue que la tige (16, 41) vissée et en ce que le capuchon métallique de protection (53) constitue des moyens de guidage longitudinal de la tige (51) emboîtée à force.

23. Frein à disque à garnitures partielles suivant l'une des revendications précédentes, caractérisé en ce que la plaquette de support (12, 13, 72) comporte, aux extrémités (24, 31) situées à une certaine distance l'une de l'autre suivant la direction circonférentielle, des zones en forme de crochet (24, 31) comportant des saillies (25, 25') qui sont inclinées radialement vers l'intérieur et qui s'emboîtent dans les rainures (26) des bras de support (39, 40, 210, 211) du support de frein (3, 101, 202).

24. Frein à disque à garnitures partielles suivant la revendication 23, caractérisé en ce que les bords supérieurs (48, 49) des zones (24, 31) en forme de crochet qui font face aux saillies (25) sont situés pratiquement dans l'alignement d'un bord (12a) de la plaquette de support.

25. Garniture de frein pour frein à disque à garnitures partielles suivant l'une des revendications 2 à 11, comprenant une garniture de friction et une plaquette de support (72), caractérisée en ce que la plaquette de support (72) comporte, sur sa face supérieure s'étendant suivant la direction circonférentielle, une salle en forme de secteur de cercle (74) disposée suivant l'axe de symétrie (71) de la garniture de frein (73, 116, 130).

26. Garniture de frein suivant la revendication 25, caractérisée en ce que, à ses extrémités (24, 31) situées à une certaine distance l'une de l'autre suivant la direction circonférentielle, la plaquette de support (12, 13, 72) comporte des zones (24, 31) en forme de crochet qui présentent des saillies (25) qui s'emboîtent dans les rainures (26) des bras de support (39, 40, 210, 211) du support de frein (3, 101, 202).

27. Garniture de frein suivant la revendication 26, caractérisée en ce que les bords supérieurs (48, 49) des zones (24, 31) en forme de crochet qui font face aux saillies (25) sont situés pratiquement dans l'alignement d'un bord (12a) de la plaquette de support.

28. Garniture de frein suivant la revendication 25, caractérisée en ce qu'il est ménagé dans la saillie (133, 134) au moins un évidement (135) qui divise cette saillie (133, 134) en deux talons (133, 134) au moins trapézoïdaux.

29. Garniture de frein suivant l'une des revendications 25 à 28, caractérisée en ce que, sur sa face supérieure (129') qui s'étend suivant la direction circonférentielle (124), la plaquette de support comporte un chanfrein (129) dirigé vers la face arrière (129'').

30. Garniture de frein suivant l'une des revendications 25 à 29, caractérisée en ce que la saillie (120) a une longueur (123) dans le sens circonférentiel (124) qui est comprise entre un cinquième et la moitié de la longueur totale (125) de la garniture de frein (116) suivant la direction circonférentielle (124), notamment est égale à un tiers de cette longueur totale (125).

31. Garniture de frein suivant l'une des revendications 25 à 30, caractérisée en ce que la saillie (120) a un rayon (126) compris entre 25 et 40 mm, notamment entre 30 et 36 mm.

32. Garniture de frein suivant l'une des revendications 25 à 31, caractérisée en ce que le centre (127) de l'arc de cercle de rayon (126) de la saillie (120) est situé sur l'axe du cylindre de l'unité d'actionnement lorsque la garniture de frein (116) est montée dans le frein à disque.

33. Garniture de frein suivant l'une des revendications 25 à 32, caractérisée en ce que la hauteur radiale (126') de la saillie (120) au-dessus du bord supérieur (117') de la garniture de friction est égale au maximum à 20 mm, notamment à 13 mm.

34. Garniture de frein suivant l'une des revendications 25 à 33, caractérisée en ce que le décalage radial (127') entre des points (122, 122', 122'') de la plaquette de support (118) qui servent à l'appui radial sur le support de frein (3, 101) et sur le boîtier (2, 102) a une valeur (127') comprise entre 30 et 50 mm, notamment entre 32 et 45 mm.

35. Garniture de frein suivant l'une des revendications 25 à 34, caractérisée en ce que des surfaces d'appui intérieur (29, 34) des saillies (25, 25') orientées radialement vers l'intérieur, ces surfaces d'appui étant prévues pour les forces circonférentielles, comportent un espacement (128) compris entre 120 et 150 mm.

36. Garniture de frein suivant l'une des revendications 25 à 35, comprenant une plaquette de support (214) qui se termine latéralement suivant la direction circonférentielle par une section (216) en L et qui, par cette section (216), s'accroche derrière un rebord (219) d'un support de frein (202, 240) qui s'étend axialement et est dirigé d'une manière pratiquement radiale vers l'extérieur, la section (216) en L étant constituée de deux branches (217, 218) qui, à l'endroit d'un emplacement de jonction (220), comportent un contour courbe (222, 255) disposé intérieurement, caractérisée en ce que le contour courbe (222, 255) comporte, notamment par tronçons, des rayons différents (230, 231, 232, 248, 249, 250), en commençant par un grand rayon (232, 248), puis, en diminuant en direction d'un point d'application de charge (224), des rayons plus petits (230, 231, 249, 250).

37. Garniture de frein suivant la revendication 36, caractérisée en ce que le contour courbe (222, 255) fait partie d'une encoche (221, 241) qui pénètre dans la branche (217) s'étendant pratiquement suivant la direction circonférentielle (217').

38. Garniture de frein suivant la revendication 37, caractérisée en ce que le contour courbe (222, 255) délimite entre les deux branches (217, 218, 260) une section (256) qui fait saillie radialement vers l'intérieur.

39. Garniture de frein suivant la revendication 38, caractérisée en ce que les branches (217, 218, 260) de la plaquette de support prennent appui exclusivement à l'extérieur du contour courbe (222, 255).

40. Garniture de frein suivant l'une des revendications 38 et 39, caractérisée en ce que la branche (217) comporte deux encoches (221, 241) qui délimitent une saillie (242) qui prend appui sur le rebord (219) du support de frein (202).

41. Garniture de frein suivant l'une des revendications 38 et 39, caractérisée en ce que la branche (217) comporte deux contours courbes (222, 255) qui sont notamment symétriques par rapport à un axe de symétrie (255').

42. Support de frein pour frein à disque à garnitures partielles, notamment pour véhicule automobile, comprenant deux bras de support (210, 211) qui sont disposés à distance l'un de l'autre suivant la direction d'une sécante au disque de frein et qui comprennent un rebord (219) qui s'étend axialement et est orienté d'une manière pratiquement radiale vers l'extérieur et qui s'accroche dans une section (216) en L, se terminant latéralement suivant la direction circonférentielle, d'une plaquette de support (214) d'une garniture de frein (206) suivant l'une des revendications précédentes, le rebord (219) prenant appui sur la garniture de frein (206) par au moins deux surfaces (244, 254) disposées d'une manière pratiquement perpendiculaire l'une à l'autre, caractérisé en ce qu'à son extrémité (251) située radialement à l'extérieur, le rebord (219) comporte des surfaces (252, 253) arrondies ou chanfreinées.
